# EUROPÄISCHE PATENTSCHRIFT

(11) **EP 1 972 554 B1**
(45) Veröffentlichungstag und Bekanntmachung des Hinweises auf die Patenterteilung: **29.09.2010**
(21) Anmeldenummer: 08003940.7
(22) Anmeldetag: 03.03.2008
(51) Int. Cl.: B65B 9/22

(54) **Werkzeug für eine Schlauchbeutelmaschine zum Umformen eines Hüllmaterialstreifens in einen Schlauch**
Tool for a tubular bag-making machine for deforming a strip of wrapping material into a tube
Outil pour une ensacheuse destiné à déformer une bande de matériau d'emballage dans un tuyau souple

(30) Priorität: 17.03.2007 DE 102007012862
(43) Veröffentlichungstag der Anmeldung: 24.09.2008
(73) Patentinhaber: MediSeal GmbH, 33758 Schloss Holte-Stukenbrock (DE)
(72) Erfinder: Zellermann, Michael, 33415 Verl (DE); Ringel, Hartmut, 33813 Oerlinghausen (DE)
(74) Vertreter: Rehberg Hüppe + Partner

(56) Entgegenhaltungen:
- EP-A- 1 495 966
- CH-A- 490 995
- US-A- 3 415 171

## Beschreibung

### TECHNISCHES GEBIET DER ERFINDUNG

Die Erfindung betrifft ein Werkzeug für eine Schlauchbeutelmaschine zum Umformen eines Hüllmaterialstreifens in einen Schlauch mit einer mehrteiligen Formschulter und einem Füllrohr. Gleichzeitig bezieht sich die Erfindung auf eine Schlauchbeutelmaschine mit einem solchen Werkzeug.

Die Formschulter und das Füllrohr sind in der vertikalen Schlauchbeutelmaschine mit einer gemeinsamen Mittelachse angeordnet, die in der Regel vertikal ausgerichtet ist. Dies gilt für eine Einbringung des Füllguts durch das Füllrohr unter Nutzung der Schwerkraft. Es ist jedoch auch möglich, die Formschulter so in der horizontalen Schlauchbeutelmaschine anzuordnen, dass die Mittelachse horizontal verläuft. Besonders in diesem Fall bietet sich die Anwendung einer Schneckendosierung an.

Als Füllgut kommen insbesondere pulver- oder granulatförmige feste Güter, wie Zucker, Salz, Tabakkrümel, Tabakstaub, Teeblätter oder dergleichen, aber auch flüssige oder breiige pastöse Massen, wie Senf, Gewürze, Milch oder dergleichen in Frage. Auch feste Körper, wie Pralinen, Riegel, Trockenhefe, Einmalspritzen, Zahnstocher, Eislöffel oder dergleichen lassen sich in Schlauchbeuteln verpacken.

### STAND DER TECHNIK

Aus der CH490 995 ist ein Werkzeug für eine Schlauchbeutelmaschine zum Umformen eines ebenen einlagigen Hüllmaterialstreifens in einen Schlauch bekannt. Das Werkzeug besteht im Wesentlichen aus einer mehrteiligen Formschulter und einem Füllrohr. Die Formschulter ist in einer durch die Mittelachse des Füllrohrs und der Formschulter sowie durch die Mittellinie des Hüllmaterialstreifens definierten Trennebene geteilt ausgebildet. Die Formschulter ist auch in einer zweiten Trennebene geteilt ausgebildet, die vertikal und parallel zu der Achse der Rolle, von dem der Hüllmaterialstreifen abgewickelt wird, angeordnet ist. Zwei Teile der Formschulter sind relativ zueinander um zwei sich parallel zu der Mittelachse erstreckende Drehachsen verschwenkbar angeordnet, so dass sie in eine geschlossene und eine offene Stellung verbracht werden können. Die Drehachsen liegen in der zweiten Trennebene durch die Mittelachse. Die beiden verschwenkbaren Teile der Formschulter sind in eine geschlossene Lage und eine geöffnete Lage zum erleichterten Einfädeln des Hüllmaterialstreifens in einen Kanal zwischen Formschulter und Füllrohr bewegbar. Die Formschulter weist eine Führungsfläche für den Hüllmaterialstreifen und den Kanal zur Aufnahme des Füllrohrs auf. Das Füllrohr ist in der geöffneten Lage der beiden verschwenkbaren Teile der Formschulter durch eine Schwenkbewegung um eine horizontale oder eine vertikale Achse aus dem Kanal ausschwenkbar. Zwischen Füllrohr und Kanal ist ein über den Umfang durchgehender umlaufender Durchzugsspalt für den Durchtritt des Hüllmaterialstreifens bzw. Schlauchs gebildet. Es ist nicht erkennbar, ob und wie der Schlauch mit einer Längssiegelung geschlossen werden kann. Beim Verschwenken der schwenkbaren Teile der Formschulter in die offene Lage und dem Abschwenken des Füllrohres wird der Raum im Innern der Formschulter für eine erleichterte Handhabung des einzufädelnden Hüllmaterialstreifens vorteilhaft zugänglich. Trotzdem ist erhebliche Geschicklichkeit erforderlich, um den Hüllmaterialstreifen in eine stabile Einlauflage für die Produktion zu bringen. Beim Verschwenken der schwenkbaren Teile der Formschulter in die geschlossene Lage werden im Gelenkbereich der Drehachsen sich in Längsrichtung an der Formschulter gebildete Spalte geschlossen, so dass die Gefahr des Einklemmens des Hüllmaterialstreifens besteht.

Aus der DE 203 20 160 U1 ist ein Werkzeug für eine Schlauchbeutelmaschine bekannt, welches als wesentliche Elemente eine Formschulter und ein Füllrohr aufweist. Die Formschulter besitzt einen Kanal zur Aufnahme des Füllrohrs. Zwischen Füllrohr und Kanal wird ein Durchzugsspalt für den Durchtritt des Hüllmaterialstreifens, der hier zu einem Schlauch umgeformt ist, gebildet. Der Kanal beginnt an einer Umlenkkante. Die Umlenkkante bildet sich aus der Verschnittlinie der Führungsfläche der Formschulter im Einlaufbereich mit dem Kanal. Die Umlenkkante läuft über den Umfang des Kanals nicht vollständig durch, sondern ist randoffen ausgebildet, wobei die schulterartigen Kragen der Formschulter in der Regel asymmetrisch ausgebildet sind und auch übereinander greifen. Während der Hüllmaterialstreifen über die Formschulter gezogen wird und in den Kanal eintritt, entsteht Reibung, die Verschleiß zur Folge hat. Der Verschleiß macht sich am stärksten im Bereich der Umlenkkante bemerkbar. Auf den Hüllmaterialstreifen wirkt durch eine Abzugseinrichtung der Schlauchbeutelmaschine eine Zugspannung ein, aus der sich der Andruck des Hüllmaterialstreifens gegen die Umlenkkante bestimmt. Die dort, also im Bereich der Umlenkkante auftretenden ungünstigen Reibungs- und Verschleißverhältnisse, sind die Ursache dafür, dass die Formschulter ihre ordnungsgemäße Funktion nur über eine begrenzte Einsatzzeit erbringen kann und dann ausgewechselt werden muss. Um die Erneuerung der Formschulter einfacher und kostengünstiger zu gestalten, ist die Formschulter mehrteilig ausgebildet und weist einen kleinen Einsatz auf, der einen Teil der Formschulter im Bereich der Umlenkkante darstellt, so dass es bei auftretendem Verschleiß nur noch erforderlich ist, den Einsatz und nicht die gesamte Formschulter auszutauschen. Der Einsatz kann aus einem härteren Material bestehen als der übrige Teil der Formschulter. Während des Betriebs der Formbeutelmaschine sind die beiden Teile der Formschulter fest miteinander verbunden, insbesondere verschraubt. Nur zu Zwecken des Austauschs eines verschlissenen Einsatzes gegen einen neuen Einsatz ist der Einsatz lösbar und wieder befestigbar.

Auch aus der DE 102 09 356 A1 ist eine mehrteilige Formschulter für eine Schlauchbeutelmaschine bekannt. Die Formschulter ist zur Bildung eines Doppelschlauchs ausgebildet, so dass der die Formschulter durchsetzende Kanal eine relativ kompliziert gestaltete Oberfläche aufweist. Um die Herausarbeitung des Kanals aus einem Block von Vollmaterial möglichst einfach zu gestalten, ist die Formschulter durch eine Trennebene in drei Teile unterteilt. Die Trennebene erstreckt sich bei dieser vertikalen Schlauchbeutelmaschine in vertikaler Richtung durch die Mittelachsen der beiden zur Bildung des Doppelschlauchs verbundenen Kanäle. Die beiden lösbaren Teile der mehrteiligen Formschulter bilden Abdeckungen für den Kanal. Die Trennebene erstreckt sich damit parallel zur rückwärtigen Ebene der Formschulter. Denkt man sich den im Bereich des Kanals schlauchförmig verformten Hüllmaterialstreifen in eine ebene Gestalt zurückverformt, dann liegt die Trennebene in der Ebene des Hüllmaterialstreifens. Während des Betriebs der Schlauchbeutelmaschine sind die Teile der Formschulter fest miteinander verbunden und damit unbeweglich gegeneinander gehalten.

Aus der DE 103 30 852 A1 ist eine vertikale Schlauchbeutelmaschine mit einem Werkzeug aus einer Formschulter und einem Füllrohr bekannt. Die Formschulter ist in einer vertikalen Trennebene, die parallel zu der Achse der Rolle, von der der Hüllmaterialstreifen abgewickelt wird, angeordnet ist und durch die Mittelachse des Füllrohres geht, geteilt ausgebildet, so dass die Formschulter geöffnet werden kann. Es wird so ein Schultermantel aus zwei separaten Mantelteilen gebildet. Weiter werden Baueinheiten aus je einem Mantelteil und einem Stutzenteil gebildet. Eine Baueinheit ist von der anderen Baueinheit abnehmbar, um das Füllrohr quer zur Transportrichtung aus der Formschulter entnehmen zu können. Durch die Veränderung des Abstandes zwischen den Baueinheiten ist auch die Einstellung einer variablen Beutelbreite möglich. Die Zugänglichkeit des Raumes in der geteilten Formschulter, z. B. zur Erleichterung einer Einfädelung des Hüllmaterialstreifens, wird nur bedingt verbessert. Auch hier besteht die Gefahr des Einklemmens des Hüllmaterialstreifens beim Verschwenken der Teile der Formschulter in die geschlossene Lage.

Auch aus der DE 102 51 072 A1 ist eine geteilte Formschulter für eine Schlauchbeutelmaschine bekannt. Auch hier verläuft die Trennebene zwischen den beiden Teilen der Formschulter vertikal, und zwar so, dass eine zur Trennebene parallele Ebene durch die Achse der Rolle geht, von der der Hüllmaterialstreifen abgewickelt wird. Es ist eine Verstelleinrichtung zum Verändern und Fixieren des Abstands zwischen den beiden Teilen der Formschulter vorgesehen. Dies soll dem Zweck dienen, auf einfache Weise eine Umstellung auf eine andere Breite des Hüllmaterialstreifens vornehmen zu können. Während des Betriebs der Schlauchbeutelmaschine sind auch hier die beiden Teile der Formschulter örtlich fixiert gehalten und nicht gegeneinander beweglich. Die Veränderung des Abstands zwischen den beiden Teilen der Formschulter wird nur beim Umrüsten der Schlauchbeutelmaschine auf einen Hüllmaterialstreifen mit abweichender Breite genutzt.

Aus der DE 698 03 525 T2 ist eine weitere Schlauchbeutelmaschine zum Umformen eines ebenen Hüllmaterialstreifens in einen Schlauch bekannt. Die Schlauchbeutelmaschine weist keine Formschulter, sondern eine Mehrzahl von beabstandeten Formwalzen auf. Um den Versiegelungszustand des sich überlagernden Teils der schlauchförmigen Bahn zu optimieren, kann die Höhenposition der unteren Formwalze in senkrechter Richtung eingestellt werden.

### AUFGABE DER ERFINDUNG

Der Erfindung liegt die Aufgabe zugrunde, ein Werkzeug für eine Schlauchbeutelmaschine zu schaffen, bei dem die Problematik des Einklemmens des Hüllmaterialstreifens in einem Spalt der Formschulter beim Einfädeln wesentlich reduziert ist.

### LÖSUNG

Die Aufgabe der Erfindung wird erfindungsgemäß mit den Merkmalen des unabhängigen Patentanspruchs 1 bzw. 9 gelöst.

### BESCHREIBUNG DER ERFINDUNG

Die Erfindung betrifft ein Werkzeug für eine Schlauchbeutelmaschine zum Umformen eines ebenen Hüllmaterialstreifens in einen Schlauch mit einem Füllrohr und einer Formschulter mit einem ersten Teil und einem zweiten Teil. Die Formschulter ist in einer durch die Mittelachse des Füllrohrs und der Formschulter sowie durch die Mittellinie des Hüllmaterialstreifens definierten Trennebene zur Bildung der Teile geteilt ausgebildet. Der erste Teil und der zweite Teil der Formschulter sind derart relativ zueinander verschwenkbar angeordnet, dass die zwei Teile in eine geschlossene Lage und in eine geöffnete Lage bewegbar sind. Die Formschulter weist eine Führungsfläche für den Hüllmaterialstreifen und einen Kanal zur Aufnahme des Füllrohrs auf. Zwischen dem Füllrohr und dem Kanal ist ein Durchzugsspalt für den Durchtritt des Hüllmaterialstreifens bzw. Schlauchs gebildet. Die Formschulter weist eine ortsfest angeordnete Kappe auf, die von den zwei Teilen durch eine senkrecht zu der Mittelachse verlaufende Teilungsebene geteilt ist.

Das Werkzeug in der Schlauchbeutelmaschine zum Umformen eines Hüllmaterialstreifens in einen Schlauch weist im Wesentlichen zwei Teile auf, nämlich die Formschulter und das Füllrohr. Die Formschulter stellt einen räumlichen Formkörper aus festem unnachgiebigem Material dar, und zwar entweder aus Vollmaterial oder aus Blech, in der Regel aus Stahl oder einem anderen Material. Der Hüllmaterialstreifen wird als ebene Bahn von der Rolle abgenommen und vermittels der Formschulter in einen Schlauch umgeformt. Der Hüllmaterialstreifen kann ein- oder mehrlagig sein. Bei mehrlagiger Arbeitsweise decken sich die einzelnen Lagen mehr oder weniger, je nachdem, ob sie gleiche oder unterschiedliche Breite aufweisen. Die mehreren Lagen werden mit der Formschulter gleichzeitig in einen Schlauch umgeformt. Der Schlauch kann einen runden, rechteckigen, oder anders konvex geformten Querschnitt umschließen. Die Geometrie der Führungsfläche der Formschulter, also der Fläche, die mit dem Hüllmaterialstreifen in Kontakt kommt, ist so dimensioniert und räumlich gestaltet, dass jede Materialfaser des Hüllmaterialstreifens während der Umformung einen gleichen Weg zurücklegt und der Abstand benachbarter Materialfasern quer zur Laufrichtung konstant bleibt. Der Hüllmaterialstreifen wird also partiell weder gestreckt, gelängt oder bleibend verformt.

Eine weitere Problematik tritt beim Rollenwechsel auf, wenn der Vorteil genutzt werden soll, auf einen gesonderten Einfädelvorgang zu verzichten und durch ein Ankleben des Endes des vorangehenden Hüllmaterialstreifens an den Anfang des nachfolgenden Hüllmaterialstreifens die Klebestelle um die Umlenkkante und durch den Durchzugsspalt zwischen Kanal und Füllrohr zu ziehen, um der aufwändigen Entfernung und dem Wiedereinbau des Füllrohrs zu entgehen. An einer solchen Klebestelle tritt etwa die doppelte Materialdicke des Hüllmaterialstreifens oder jedenfalls eine vergrößerte Materialdicke auf. Wenn diese Materialdicke die Dicke des Durchzugspalts überschreitet, ist eine solche Arbeitsweise nicht möglich, weil hier regelmäßig ein Abriss des Hüllmaterialstreifens eintritt. Wenn man bei mehrbahniger Arbeitsweise ohne Spreizung der einzelnen nebeneinander laufenden Hüllmaterialstreifen arbeitet, bestimmt die Breite des Hüllmaterialstreifens die Breite des Bauraums für die einzelne Formschulter innerhalb der mehreren nebeneinander angeordneten Formschultern. Die durch die Mittelachsen der Formschultern bzw. der Füllrohre festgelegte Teilung entspricht der Breite des Hüllmaterialstreifens. Einfädelvorgänge oder Rollenwechsel unter Anwendung der Klebetechnik werden bei kleinen Durchmessern immer schwieriger.

Nach Erkenntnissen der Anmelderin besteht insbesondere bei Schlauchbeuteln mit kleinem Durchmesser - also bei Durchmessern von etwa 3 mm bis 15 mm bezogen auf einen Schlauchbeutel mit rundem Querschnitt - das Problem, zu Arbeitsbeginn den Hüllmaterialstreifen, der von der Rolle kommt, in den Kanal zwischen der Formschulter und dem Füllrohr einzufädeln und dabei in eine solche Relativlage zu bringen, dass der Hüllmaterialstreifen nicht seitlich verläuft, sondern eine Tendenz zum Verbleib in symmetrischer Anordnung zu der gemeinsamen Mittelachse der Formschulter und des Füllrohrs bzw. einer Ebene durch diese Mittelachse einzunehmen, die die Achse der Rolle senkrecht schneidet. Bei asymmetrischer Platzierung des Hüllmaterialstreifens zu dieser Ebene gibt es eine Grenze, die zwei Gebiete trennt. Das erste Gebiet ist ein nutzbares Gebiet in Richtung auf die Mittelachse, in der der Hüllmaterialstreifen die Tendenz aufweist, sich einer symmetrischen Relativlage anzunähern und diese Relativlage während des Betriebs der Schlauchbeutelmaschine beizubehalten. In dem zweiten Gebiet besteht dagegen über den Hüllenmaterialstreifen die Tendenz des seitlichen Verlaufens, so dass dieser sich immer mehr von der symmetrischen Relativlage entfernt.

Es versteht sich, dass der Einfädelvorgang so gestaltet werden muss, dass sich der Hüllmaterialstreifen innerhalb des ersten beschriebenen Gebiets befindet. Die aufgezeigte Problematik gilt nicht nur für das Einfädeln des Hüllenmaterialstreifens in den Durchzugsspalt zu Arbeitsbeginn, sondern auch dann, wenn der Hüllmaterialstreifen gerissen ist oder ein Rollenwechsel ansteht. Ein Abriss des Hüllmaterialstreifens während des Betriebs entspricht durchaus der Realität, insbesondere wenn es sich beim Material des Hüllmaterialstreifens um empfindliches Vliesmaterial, beispielsweise Zellulose, handelt. Die Problematik tritt verschärft auf, wenn doppellagig gearbeitet wird, also z. B. zwei Hüllmaterialstreifen gleicher oder unterschiedlicher Breite einander deckend gleichzeitig in den Durchtrittsspalt zwischen Formschulter und Füllrohr eingefädelt werden müssen. Noch problematischer wird es, wenn mehrbahnig gearbeitet wird, also aus einer über die Breite durchgehenden Materialbahn, die von der Rolle kommt, durch Längsschnitte mehrere parallel laufende Hüllmaterialstreifen geschnitten werden, von denen jeder in einen Durchtrittsspalt eingefädelt werden muss, und zwar in Relation zueinander. Bei einer solchen mehrbahnigen Arbeitsweise tritt oft ein Defekt dergestalt auf, dass eine oder mehrere der Hüllmaterialstreifen - aber eben nicht alle Hüllmaterialstreifen - reißen, so dass es erforderlich wird, die gerissenen Hüllmaterialstreifen neu einzufädeln und gleichzeitig die anderen Hüllmaterialstreifen weiterzuziehen. Da die Dicke des Durchzugsspalts in der Regel nur geringfügig größer als die Materialdicke des Hüllmaterialstreifens ist, muss das Füllrohr zum Einfädeln des Hüllmaterialstreifens aus der Formschulter entfernt werden. Dies geschieht durch axiales Herausziehen, also durch eine Relativbewegung des Füllrohrs in Richtung der Mittelachse. Dann wird der Hüllmaterialstreifen zusammengeknüllt oder zusammengedreht und durch den insoweit zugänglich gewordenen Kanal hindurchgeschoben. Anschließend muss das Füllrohr wiederum eingebaut werden, wozu es erforderlich ist, den zusammengedrückten oder zusammengedrehten Hüllmaterialstreifen so zu öffnen, dass er eine schlauchartige Gestalt bekommt und das Füllrohr in seinem Inneren eingesetzt werden kann. Schon dabei muss man auf die Lage der Ränder des Hüllmaterialstreifens achten, damit sie in etwa in eine siegelbare Relation zueinander kommen, wie sie für die Anbringung einer Längssiegelung erforderlich ist. Jede exzentrische Positionierung des Hüllmaterialstreifens außerhalb des ersten Gebiets, wie es oben beschrieben wurde, ergibt eine Tendenz zum weiteren seitlichen Verlaufen des Hüllmaterialstreifens, so dass dieser seine korrekte Lage nicht selbsttätig erreicht. Dem kann dadurch entgegengewirkt werden, dass durch manuellen Eingriff versucht wird, den Hüllmaterialstreifen in eine symmetrische Lage zu bringen. Dies ist besonders schwierig, wenn z. B. mehrlagig gearbeitet wird oder wenn der Schlauch einen besonders kleinen Durchmesser aufweisen muss, also die Dimensionen des Schlauchs in der Breite jedenfalls kleiner sind als die Dimensionen der Finger einer Bedienungsperson, die den Einfädelvorgang durchführt. So ist es durchaus nicht außergewöhnlich, dass insbesondere bei kleinen Durchmessern eine Einfädeldauer - je nach der Geschicklichkeit der Bedienungsperson - von 5 min bis 30 min. auftritt, insbesondere bei Hüllmaterialstreifen aus zugempfindlichem Material. Diese vertragen nur die Aufbringung einer geringen Spannung.

Gemäß der vorliegenden Erfindung wir die Formschulter relativ zum Füllrohr anders geteilt als im Stand der Technik. Die Formschulter wird in mindestens drei Teile geteilt. Es finden zwei Teilungs- oder Trennebenen Anwendung, um die Formschulter in eine ortsfeste Kappe mit der Führungsfläche für den Hüllmaterialstreifen und zwei bewegliche Teile zu unterteilen.

Die erste Trennebene zwischen Teilen der Formschulter verläuft durch die gemeinsame Mittelachse zwischen Formschulter und Füllrohr, und zwar so, dass die Trennebene senkrecht auf der Achse der Rolle steht, von der der oder die Hüllmaterialstreifen abgezogen werden. Im Vergleich zum Stand der Technik mit Längssiegelung ist die Trennebene damit um etwa 90° gedreht angeordnet. Diese neue Lage der Trennebene dient nicht der Beherrschung des eingangs beschriebenen Verschleißproblems und auch nicht der erleichterten Herstellung der Formschulter, sondern bezieht sich auf das Einfädelproblem. Das Einfädeln kann leichter und in kürzerer Zeit durchgeführt werden. Die Zugänglichkeit des Kanals wird verbessert. Die Formschulter wird durch die erste Trennebene in mindestens zwei verschwenkbare Teile und durch eine zweite horizontal ausgerichtete Trennebene in eine nicht-verschwenkbare Kappe unterteilt, kann aber auch mehr Teile aufweisen. Mindestens zwei Teile sind so geteilt, wie es die erste Trennebene vorschreibt. Zumindest die beiden durch die beschriebene Trennebene geteilten Teile der Formschulter sind zueinander so bewegbar angeordnet, dass die Teile nicht nur bei der Montage der Formschulter an der Schlauchbeutelmaschine bewegt werden, sondern auch während des Einfädelvorgangs, also zu Arbeitsbeginn, bei einem Abriss des Hüllmaterialstreifens und während eines Rollenwechsels. Die Bewegung der beiden relativ zueinander beweglichen Teile der Formschulter wird durch einen Bewegungshub herbeigeführt, dessen eines Ende durch die geschlossene Lage der Teile der Formschulter und dessen anderes Ende durch die geöffnete Lage der Teile der Formschulter bestimmt wird. Dabei ist die geschlossene Lage so festgelegt, dass in dieser Lage keine nachteilige Spaltbildung zwischen den Teilen der Formschulter auftritt, in die der Hüllmaterialstreifen einlaufen und sich dort verklemmen könnte. Andererseits wird in der geöffneten Lage der Querschnitt des Kanals so vergrößert, dass das Füllrohr nicht nur durch eine axiale Bewegung, sondern auch durch eine im Wesentlichen rechtwinklige Bewegung zu der Mittelachse des Füllrohrs aus dem Kanal entnommen werden kann. Auch Zwischenstellungen zwischen der geschlossenen Lage und der geöffneten Lage sind möglich. Insbesondere bei einem Rollenwechsel in der Anwendung von Klebetechnik ist dies vorteilhaft. In diesem Fall kann das Füllrohr an Ort und Stelle verbleiben und die Relativbewegung der beiden geteilten Teile der Formschulter reicht aus, um die Dicke des Durchtrittsspalts so zu vergrößern, dass auch eine Klebestelle ohne die Gefahr des Abrisses durch den vergrößerten Durchtrittsspalt hindurchgezogen werden kann. Das Herausholen des Füllrohrs und das Einbringen desselben in den Kanal durch eine im Wesentlichen senkrecht zu der Mittelachse verlaufende Bewegung erfordert nur einen relativ geringen Hub für das Füllrohr und damit auch nur einen wesentlich kleineren Bauraum, als er bei axialer Entfernung erforderlich ist. Als weiterer Vorteil tritt hinzu, dass oberhalb angeordnete Dosiereinrichtungen dort verbleiben können, also beim Ein- und Ausbau des Füllrohres unangetastet verbleiben können.

Die Erfindung lässt sich in verschiedenen Anwendungen realisieren. Sie kann beispielsweise dann eingesetzt werden, wenn ein- oder mehrlagig gearbeitet wird, also ein oder mehrere Hüllmaterialstreifen an einer Formschulter gleichzeitig in die Schlauchform überführt werden. Mit besonderem Vorteil lässt sich die Erfindung aber auch. dann einsetzen, wenn mehrbahnig nebeneinander gearbeitet wird, insbesondere dann, wenn aus einer relativ breiten auf der Rolle aufgewickelten Bahn mehrere nebeneinander laufende Hüllmaterialstreifen aufgeschnitten und ohne Anwendung einer Spreizung mehreren nebeneinander angeordneten Formschultern zugeführt werden. Je kleiner der Durchmesser des zu erzeugenden Schlauchbeutels ist, desto mehr machen sich die Vorteile der Erfindung in einer verkürzten Einfädelzeit und einer verbesserten Zugänglichkeit bemerkbar.

Die Formschulter kann so geteilt sein und die Teile der Formschulter so bewegbar angeordnet sein, dass der von den Teilen gebildete Kanal zumindest in der geschlossenen Lage das Füllrohr auf mehr als den halben Umfang umschließt. In der geöffneten Lage ist der Durchzugsspalt so vergrößert, dass die erleichterte Handhabung des Hüllmaterialstreifens ermöglicht ist. In der Regel wird der Kanal das Füllrohr auf nahezu 360° des Umfangs umschließen, mit Ausnahme des randoffenen Teils im Bereich der Kragenenden der beiden Formschulterteile, die mit Abstand zueinander oder mit Überdeckung zueinander enden können, je nachdem, welche Art der Längssiegelnaht Anwendung findet. Die Erfindung ist unabhängig davon, ob eine Finnensiegelung oder eine Überlappungssiegelung Anwendung findet.

Die mindestens zwei Teile der Formschulter, die durch die eingangs beschriebene Trennebene getrennt sind, sind so relativ zueinander beweglich angeordnet, dass sich in der geöffneten Lage eine vergrößerte Öffnung an der randoffenen Seite des Kanals ergibt. Diese Vergrößerung ist so getroffen, dass der Abstand zwischen den Teilen der Formschulter größer ist als der Durchmesser des Füllrohrs. Demzufolge kann das Füllrohr mit einer im Wesentlichen senkrecht zu der Mittelachse des Füllrohrs und der Formschulter verlaufenden Bewegung aus dem Kanal entfernt und wieder eingebaut werden. Gleichzeitig kann der Hüllmaterialstreifen ebenfalls mit einer im Wesentlichen senkrecht zu der Mittelachse des Füllrohrs und der Formschulter verlaufenden Bewegung in den Kanal einfädelbar sein. Dies ist insofern vorteilhaft, als ein Zusammendrehen des Hüllmaterialstreifens vor dem Einfädeln nicht unbedingt erforderlich ist und nur ein Zusammenlegen notwendig ist. Die Handhabung kann sogar in der Weise erfolgen, dass der Hüllmaterialstreifen als ebener Streifen mit der Einbringung des Füllrohrs in den Kanal in seine Schlauchform überführt wird.

Für die Realisierung der Erfindung im Rahmen der eingangs definierten Teilung der Formschulter mit der zugehörigen Relativbewegung ergeben sich verschiedene konstruktive Möglichkeiten, die weitgehend unabhängig davon sind, ob letztendlich die Formschulter in drei oder mehr Teile unterteilt ist. Beide Teile der Formschulter können so schwenkbar gelagert sein, dass sie auch um eine gemeinsame Drehachse verschwenkbar sind. Diese Schwenkachse erstreckt sich in vertikaler Richtung und steht auf einer Horizontalebene durch die Achse der Rolle, von der der Hüllmaterialstreifen abgezogen wird, senkrecht.

Die Formschulter weist eine ortsfest angeordnete Kappe und zwei im Wesentlichen symmetrisch zu der Mittelachse getrennte Teile auf, wobei die beiden Teile um eine oder zwei sich parallel zu der Mittelachse erstreckende Drehachsen verschwenkbar angeordnet sind. Die Formschulter besteht also aus mindestens drei Teilen. Die Kappe ist ortsfest angeordnet, zweckmäßig lösbar, um sie bei auftretenden Verschleißproblemen auszutauschen. Die Lage der Kappe ergibt sich entsprechend der zweiten Trennebene - d. h. der Teilungsebene. Die beiden anderen Teile der Formschulter ergeben sich durch die Lage der eingangs beschriebenen ersten Trennebene. Die Drehachse oder die Drehachsen dieser Teile erstrecken sich im Wesentlichen vertikal, also parallel zu der Mittelachse der Formschulter. Für eine horizontale Schlauchbeutelmaschine gilt Entsprechendes.

Bei allen Ausführungsformen, bei denen mehrbahnig gearbeitet wird, ist der Umriss der relativbeweglichen Teile so gestaltet, dass er innerhalb der Teilung der Formschultern liegt. Der durch die Teilung zur Verfügung gestellte quaderförmige Bauraum darf also in keiner Lage der Teile überschritten oder verlassen werden. Die Teilung entspricht der Breite der Hüllmaterialstreifen, wenn bei mehrbahniger Arbeitsweise ohne Spreizung der Hüllmaterialstreifen gearbeitet wird. Bei der verschwenkbaren Anordnung und Bewegung der relativ zueinander beweglichen Teile lässt es sich nicht vermeiden, dass an verschiedenen Stellen der Formschulter, wenn die Teile verschiedene Lagen einnehmen, Spalte entstehen. Der Hüllmaterialstreifen hat bei ungünstiger, d. h. nachteiliger Lage eines Spalts die Tendenz, in einen solchen Spalt einzulaufen und sich dort festzuklemmen, so dass ein Abriss des Hüllmaterialstreifens in der Regel die Folge ist. Die Spalte müssen also konstruktiv so gelegt werden, dass die beschriebene nachteilige Wirkung nicht eintritt. Ein Spalt an der Formschulter in einem Bereich, in welchem der Hüllmaterialstreifen in einer Ebene aufgespannt geführt wird, ist ohne nachteiligen Einfluss. Dagegen kann ein Spalt im Bereich, in dem der Hüllmaterialstreifen teilweise oder ganz schlauchartig bereits verformt ist, zu einem Nachteil führen, wenn die einwirkenden Kräfte den Hüllmaterialstreifen in einen solchen Spalt hineintreiben. Eine solche Anordnung muss vermieden werden.

Bei Gestaltung der geteilten Formschulter in der Weise, dass die ortsfeste Kappe einerseits und die zwei relativ zueinander bewegbaren Teile gebildet werden, wird als zweite Trennebene eine Teilungsebene angewendet, die so liegt, dass sie sich senkrecht zu der Mittelachse des Füllrohrs und der Formschulter erstreckt. Diese zweite Teilungsebene liegt also bei einer vertikalen Schlauchbeutelmaschine horizontal. Die Teilungsebene steht senkrecht zu der Trennebene. Die Teilungsebene ist vorteilhaft so angeordnet, dass die Verschneidungslinie zwischen der Teilungsebene und dem Kanal den Kanal etwa auf halbem Umfang umschließt. Die Teilungsebene kann aber auch höher angeordnet sein. In all diesen Fällen ergibt sich die Möglichkeit, das Füllrohr auch im Bereich der Kappe senkrecht zu seiner Mittelachse zu bewegen, also aus dem Kanal herauszuführen oder in diesen einzubringen. Freilich muss dabei auch die zugehörige Relativbeweglichkeit der Teile der Formschulter gegeben sein, die durch die eingangs definierte Trennebene definiert sind.

In einer besonders vorteilhaften Ausführungsform können die beiden Teile der Formschulter, die durch die eingangs definierte Trennebene bestimmt sind, mit einem gesteuerten Antrieb versehen sein, der dazu dient, die Teile zwischen der geschlossenen und der geöffneten Lage hin- und herzubewegen und z. B. auch Zwischenstellungen zu ermöglichen, wie sie bei einem Rollenwechsel unter Anwendung von Klebetechnik sinnvoll sind. Damit ist es möglich, die Herstellung von Schlauchbeuteln und die Verpackung des Füllguts in solche Schlauchbeutel während einer Arbeitszeit auch über die mehreren Rollenwechsel hindurch durchlaufen zu lassen und auf Einfädelvorgänge zu verzichten. Ein Einfädelvorgang ist dann nur noch erforderlich, wenn ein Abriss des Hüllmaterialstreifens eingetreten ist.

Das Werkzeug mit seinen beschriebenen Merkmalen stellt das Herzstück einer Schlauchbeutelmaschine dar. Der wesentliche Charakter und die entscheidenden Vorteile einer solchen Schlauchbeutelmaschine werden durch ein Werkzeug mit den Merkmalen nach mindestens einem der Ansprüche 1 bis 9 bestimmt.

Bei dem erfindungsgemäßen Werkzeug bzw. der erfindungsgemäßen Schlauchbeutelmaschine mit dem Werkzeug kann eines oder mehrere der folgenden Merkmale erfüllt sein: Der Hüllmaterialstreifen kann ein- oder mehrlagig ausgebildet sein. Die Teile der Formschulter können um eine oder zwei sich insbesondere parallel zu der Mittelachse erstreckende Drehachsen verschwenkbar angeordnet sein. Die geöffnete Lage der Teile der Formschulter kann zum erleichterten Einfädeln des Hüllmaterialstreifens in den Kanal dienen. Der Durchzugsspalt kann im Wesentlichen durchgehend umlaufend ausgebildet sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ansicht auf vier nebeneinander angeordnete Formschultern mit jeweiligen Füllrohren, also bei mehrbahniger Arbeitsweise unter Wiedergabe verschiedener Stellungen der Teile der Formschulter.
- **Fig. 2**: zeigt eine Draufsicht auf die Anordnung der Formschultern gemäß Fig. 1.
- **Fig. 3**: zeigt eine Schnittdarstellung durch eine einzelne Formschulter ohne Wiedergabe des Füllrohrs gemäß der Linie III-III in Fig. 1.
- **Fig. 4**: zeigt eine weitere Ausführungsform der geteilten Formschulter in einer Ansicht wie in Fig. 1, jedoch nur anhand einer einzelnen Formschulter, also für eine einbahnige Arbeitsweise.
- **Fig. 5**: zeigt die zugehörige Draufsicht auf die Formschulter gemäß Fig. 4 in geschlossenem Zustand, teilweise geschnitten.
- **Fig. 6**: zeigt die zugehörige Draufsicht auf die Formschulter gemäß Fig. 4 in geöffnetem Zustand.
- **Fig. 7**: zeigt eine Seitenansicht der Formschulter gemäß Fig. 4.
- **Fig. 8**: zeigt eine Ansicht der Formschulter gemäß Fig. 4 in Richtung VIII-VIII, also von unten, in vergrößerndem Maßstab.
- **Fig. 9**: zeigt eine perspektivische Darstellung der Formschulter gemäß den Fig. 4 bis 8 in geschlossener Lage.
- **Fig. 10**: zeigt eine perspektivische Darstellung der Formschulter gemäß den Fig. 4 bis 8 in geöffneter Lage.
- **Fig. 11**: zeigt eine Seitenansicht der Kappe der Ausführungsform der Formschulter gemäß den Fig. 4 bis 10.
- **Fig. 12**: zeigt eine Ansicht der Kappe gemäß Fig. 11 von hinten.
- **Fig. 13**: zeigt eine Ansicht der Kappe in Richtung XIII, also von unten.
- **Fig. 14**: zeigt eine Seitenansicht des einen Teils der Formschulter, wie es auch aus den Fig. 4 und 7 erkennbar ist, jedoch in vergrößerndem Maßstab.
- **Fig. 15**: zeigt eine Ansicht des Teils der Fig. 14 von hinten.
- **Fig. 16**: zeigt eine Ansicht des Teils gemäß Fig. 14 in Richtung XVI, also von unten.
- **Fig. 17**: zeigt eine Seitenansicht des anderen Teils der Formschulter, wie es auch aus den Fig. 4 und 7 erkennbar ist, jedoch in vergrößerndem Maßstab.
- **Fig. 18**: zeigt eine Ansicht des Teils der Fig. 17 von hinten.
- **Fig. 19**: zeigt eine Ansicht des Teils gemäß Fig. 17 in Richtung XVI, also von unten.

### FIGURENBESCHREIBUNG

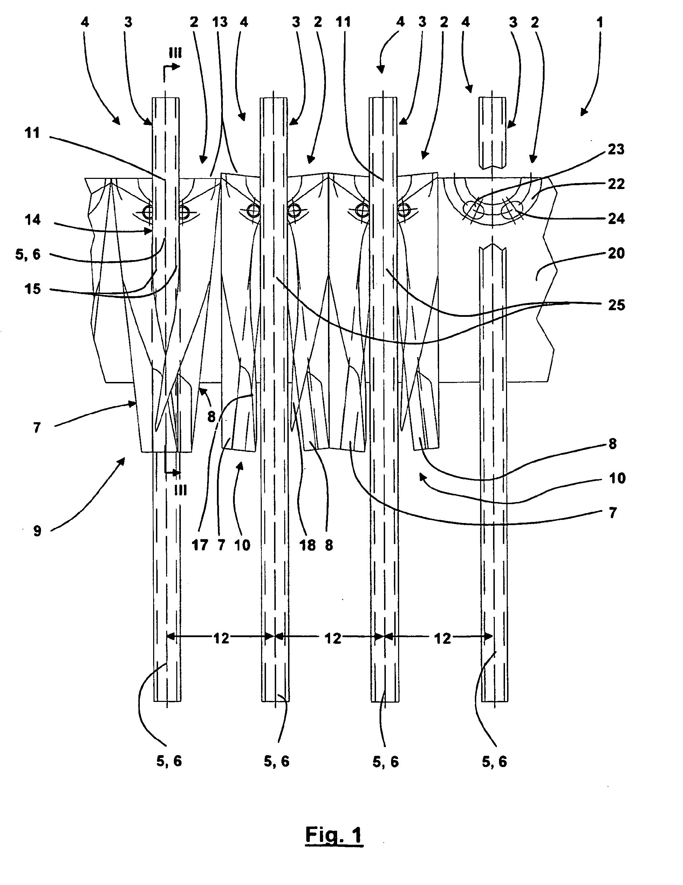

Fig. 1 zeigt das Herzstück einer vertikalen Schlauchbeutelmaschine 1 in Form von vier nebeneinander angeordneten Formschultern 2. Zu jeder Formschulter 2 gehört ein Füllrohr 3. Jede Formschulter 2 bildet zusammen mit dem zugehörigen Füllrohr 3 ein Werkzeug 4 zum Umformen je eines (nicht dargestellten) Hüllmaterialstreifens aus einer ebenen Lage in einem Schlauch. Jedes Werkzeug 4 weist eine Mittelachse 5 auf. Die Mittelachse 5 ist zugleich die Mittelachse jedes Füllrohrs 3 und jeder Formschulter 2. Jede Formschulter 2 ist durch eine erste Trennebene 6 in zwei Teile unterteilt. Die Trennebenen 6 gehen durch die Mittelachsen 5 und stehen jeweils senkrecht auf der Zeichenebene der Fig. 1. Auf diese Weise wird jede Formschulter 2 in zwei separate bewegliche Teile 7 und 8 unterteilt.

In Fig. 1 sind am Beispiel der vier Formschultern 2 zwei verschiedene Lagen verdeutlicht, die die Teile 7 und 8 jeder Formschulter 2 relativ zueinander einnehmen können. Die am weitesten links erkennbare Formschulter 2 befindet sich in einer geschlossenen Lage 9. In der am weitesten rechts befindlichen Darstellung sind die Teile 7 und 8 der Formschulter 2 nicht dargestellt, während die beiden mittleren Darstellungen der Formschultern 2 je eine geöffnete Lage 10 wiedergeben. Um die Beweglichkeit der Teile 7 und 8 relativ zueinander bzw. symmetrisch zu der Trennebene 6 zu ermöglichen, sind die Teile 7 und 8 der Formschulter 2 um eine gemeinsame virtuelle Drehachse 11 schwenkbar angeordnet. Dabei ist der Umriss der Teile 7 und 8 konisch gestaltet, um die notwendige Bewegung der Teile 7 und 8 aus der geschlossenen Lage 9 in die geöffnete Lage 10 zu ermöglichen und trotzdem einen räumlichen Quader nicht zu überschreiten und sich gegenseitig zu blockieren. Dieser räumliche Quader wird durch die Teilung 12, die dem Abstand der Mittelachsen 5 bzw. der Trennebenen 6 voneinander entspricht, festgelegt. Die Teilung 12 entspricht der Breite des Hüllmaterialstreifens, den dieser in der Ebene einnimmt.

Die Oberseiten der beiden Teile 7 und 8 jeder Formschulter 2 weisen auf bzw. bilden eine Führungsfläche 13 für die Umformung des Hüllmaterialstreifens aus einer Ebene in einen Schlauch.

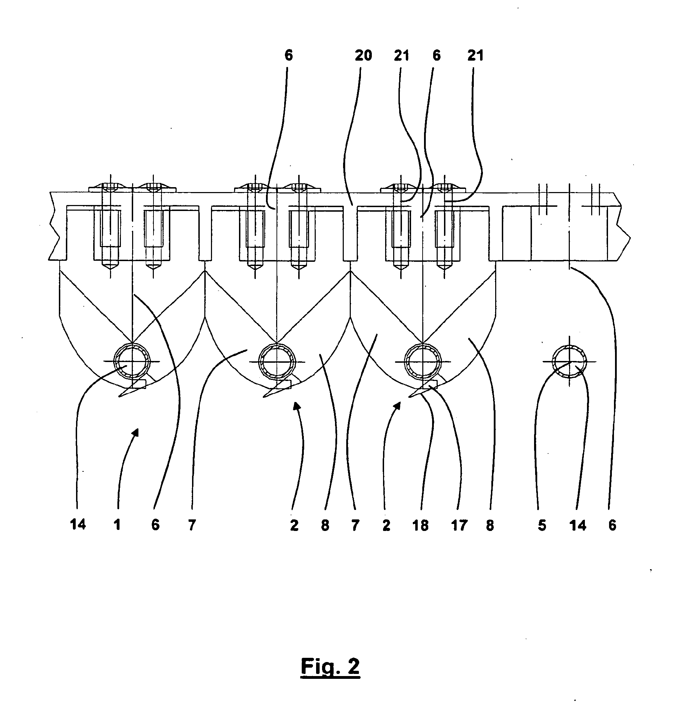

Die beiden Teile 7 und 8 jeder Formschulter 2 besitzen symmetrisch zu der Trennebene 6 verlaufende Ausnehmungen, die zusammen einen Kanal 14 zur Aufnahme des Füllrohrs 3 bilden. Es versteht sich, dass das Füllrohr 3 in dem Kanal 14 symmetrisch und mit Spiel aufgenommen ist. Auf diese Weise wird ein Durchzugsspalt 15 zwischen der Innenwandung des Kanals 14 und der Außenwandung jedes Füllrohrs 3 gebildet. Die Breite des Durchtrittsspalts ist bzw. kann in der Regel nur geringfügig größer sein als die Dicke des Hüllmaterialstreifens, der beim Durchtritt durch den Durchzugsspalt Schlauchform angenommen hat. Die Führungsfläche 13 geht im Bereich einer Umlenkkante 16 in die Innenwandung des Kanals 14 über. Die Fig. 1 bis 3 lassen erkennen, dass die beiden Teile 7 und 8, die jeweils eine Formschulter bilden, nicht vollständig symmetrisch zu der Trennebene 6 ausgebildet sind. Das Teil 7 und das Teil 8 weisen Nasen 17 bzw. 18 auf, die sich nach vorne erstreckende Fortsätze bilden. Die Nasen 17, 18 bzw. Fortsätze bilden das Ende der Führungsfläche 13. Die Nasen 17 und 18 sind unterschiedlich gestaltet und stellen zwischen sich die randoffene Öffnung des Kanals 14 dar, in dessen Bereich die beiden seitlichen Enden des Hüllmaterialstreifens umgeformt werden. Die Relativlage der Enden des Hüllmaterialstreifens in seitlicher Richtung zueinander kann nach Art einer Finne ausgebildet sein. In diesem Falle wird der Schlauch durch eine Finnnaht geschlossen. Die beiden Nasen 17 und 18 müssen anders gestaltet sein, wenn eine Überlappungsnaht gewünscht wird. Die zeichnerische Darstellung der Fig. 1 bis 3 der Nasen 17 und 18 lässt erkennen, dass hier eine Überlappungsnaht des Schlauchs durch eine Längssiegelung der beiden Ränder des Hüllmaterialstreifens vorgesehen ist.

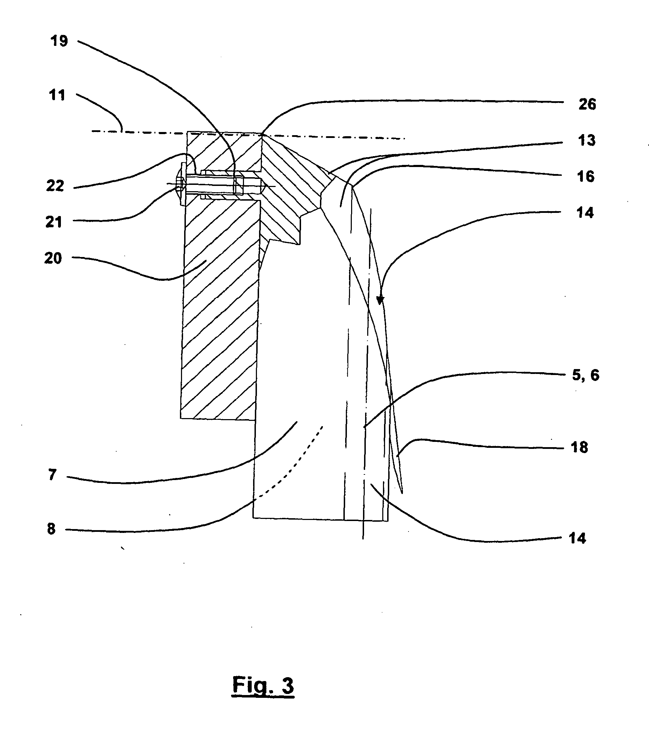

Die schwenkbare Lagerung der beiden Teile 7 und 8 der Formschulter ist konstruktiv in verschiedener Weise möglich. Es wird hier eine besonders bevorzugte Ausführungsform erläutert, die insbesondere aus dem Vergleich der Fig. 1 bis 3 entnehmbar ist. Jedes Teil 7 und 8 jeder Formschulter 2 besitzt je einen hülsenartigen, nach hinten reichenden Fortsatz 19, der sich in einen gemeinsamen Träger 20 hineinerstreckt, der zur schwenkbaren Lagerung sämtlicher Formschultern 2 bzw. der jeweiligen Teile 7 und 8 der Formschultern 2 vorgesehen und gestaltet ist. In den hülsenartigen Fortsatz 19 jedes Teils 7 und 8 ragt je eine Schraube 21 (Fig. 3), so dass jedes Teil 7 an dem gemeinsamen Träger 20 schwenkbeweglich fixiert bzw. gehalten ist. An jeder Stelle, an der eine Formschulter 2 im gemeinsamen Träger 20 angeordnet ist, befindet sich eine Bogennut 22 (Fig. 1). Symmetrisch zu der Trennebene 6 und senkrecht zu der Zeichenebene der Fig. 1 wird die Bogennut von zwei Langlöchern 23 und 24 durchsetzt. Die Schraube 21, mit der das Teil 7 schwenkbeweglich gelagert ist, durchsetzt das Langloch 23. Die Schraube 21 des Teils 8 durchsetzt das Langloch 24, jeweils mit solchem Spiel, dass die relative Bewegung der Teile 7 und 8 zueinander um die gemeinsame virtuelle Drehachse 11 möglich ist. Auf diese Weise kann die Formschulter 2 die geschlossene Lage 9 und die geöffnete Lage 10 einnehmen, die jeweils durch die Dimensionierung der Langlöcher 23 und 24 festgelegt bzw. begrenzt ist.

Aus Fig. 3 ist erkennbar, dass der Hüllmaterialstreifen der Führungsfläche 13 jeder Formschulter 2 von oben zugeführt wird, so dass sich in der Trennebene 6 im Bereich der Umlenkkante 16 zwischen der Führungsfläche 13 und der Innenwandung des Kanals 14 ein Winkel ergibt, der größer als 90° ist. In diesem Falle ist die virtuelle Drehachse 11 so angeordnet, dass sie durch den höchsten Punkt der Formschulter 2 bzw. der Teile 7 und 8 in der geschlossenen Lage geht. In der geöffneten Lage 10 (Fig. 1) schwenken die Teile 7 und 8 im Bereich der oberen Führungsfläche 13 etwas nach oben aus, so dass sich die aus Fig. 1 ersichtliche Relativlage ergibt. Dies bedeutet umgekehrt, dass sich in der geschlossenen Relativlage 9 im Anlaufbereich der Führungsfläche 13 ein zwickelförmiger Spalt ergibt, der jedoch keine nachteiligen Folgen hat, weil sich der Hüllmaterialstreifen in diesem Einlaufbereich in ebener Gestalt befindet, so dass ein Einlaufen des Hüllmaterialstreifens in diesen Spalt und ein Festklemmen nicht zu befürchten ist. In der geschlossenen Lage 9 befindet sich im Bereich des Kanals 14 kein Spalt zwischen den Teilen 7 und 8, so dass hier und insbesondere im Bereich der Umlenkkante 16 kein Spalt auftritt. An dieser Stelle muss eine Spaltbildung vermieden werden, zumindest in der geschlossenen Lage 10, damit der Hüllmaterialstreifen trotz Einwirken einer Zugspannung in der entsprechenden Richtung sauber über die Umlenkkante 16 und die kontaktierten Bereiche des Kanals 14 läuft.

Die Schlauchbeutelmaschine 1 mit ihren Formschultern 2 wird wie folgt betätigt bzw. gehandhabt. Bei Arbeitsbeginn, nach einem Riss des Hüllmaterialstreifens oder bei einem Rollenwechsel wird wie folgt gearbeitet. Die Schlauchbeutelmaschine wird zum Stillstand gebracht, falls es sich nicht um einen Arbeitsbeginn handelt, zu dem ohnehin Stillstand vorliegt. Die betreffende Formschulter, an der ein Abriss des Hüllmaterialstreifens stattgefunden hat oder ein Hüllmaterialstreifen eingefädelt werden muss, wird geöffnet. Hierzu werden die beiden Teile 7 und 8 der Formschulter 2 in die geöffnete Lage 10 verschwenkt, wie dies bei den beiden mittleren Formschultern 2 in Fig. 1 dargestellt ist. Durch dieses Verschwenken in die geöffnete Lage 10 entsteht vorne, also von der Bedienungsseite der Schlauchbeutelmaschine 1 her zugänglich, ein Spalt 25, der an einer Einlaufkante 26 (Fig. 3) beginnt und sich über die Führungsfläche 13 nach unten bis zu den unteren Enden der Teile 7 und 8 der Formschulter erstreckt. Dies ist dann der Fall, wenn die Drehachse 11 durch die Einlaufkante 26 geht und sich im Bereich der Umlenkkante 16 ein Winkel für die Umbiegung des Hüllmaterialstreifens bildet, der größer als 90° ausgebildet ist. In den Fällen, in denen dieser Winkel kleiner als 90° gestaltet ist, geht die Drehachse 11 durch die Umlenkkante 16 (Fig. 3), liegt also vergleichsweise tiefer. In diesem Fall sind die Umrisse der Teile 7 und 8 so gestaltet, dass sich in der geöffneten Lage 10 ein Spalt zwischen der Umlenkkante 16 und der Einlaufkante 26 öffnet, ebenso ein Spalt zwischen der Umlenkkante 16 und den unteren Enden der Teile 7 und 8 der Formschulter. Im einen wie im anderen Falle wird der Kanal 14 zur Handhabung des Hüllmaterialstreifens 2 zugänglich. Der Hüllmaterialstreifen 2 kann zusammengelegt und von oben bzw. von vorn durch den Spalt 25 in den Kanal 14 eingefädelt werden. Das Einfädeln geschieht, nachdem das Füllrohr 3 aus dem Kanal 14 herausgenommen wurde. Dies kann durch eine Axialbewegung in Richtung der Mittelachse 5 geschehen. Es ist aber auch möglich, das Füllrohr 3 nach dem Öffnen der Teile 7 und 8 durch eine Bewegung senkrecht zur Achse des Füllrohres 3 herauszunehmen. Nach dem Einfädeln des Hüllmaterialstreifens in den Kanal 14 wird das Füllrohr 3, in der Regel von oben, aber auch von vorn, in den Teil des Hüllmaterialstreifens eingebracht, der schlauchförmig zusammengelegt worden ist. Hierbei wird das Material des Hüllmaterialstreifens so aufgeweitet, dass es sich mehr oder weniger glatt über den Umfang des Durchzugsspalts 15 zwischen der Innenwandung des Kanals 14 und der Außenwandung des Füllrohrs 3 erstreckt. Die beiden Ränder des Hüllmaterialstreifens werden nach vorne, also zur Bedienungsseite hin, zwischen den Nasen 17 und 18 überstehend gehandhabt, damit sie in der Folge, wie bekannt, einer Längssiegelung zugeführt werden können. Beim Einfädeln kommt es darauf an, den Hüllmaterialstreifen symmetrisch zu der Längsmittelachse 5 und der Trennebene 6 zu positionieren. Während dieser Positionierung werden die Teile 7 und 8 der Formschulter 2 in die geschlossene Lage 9 überführt, wie dies in Fig. 1 bei der linken Formschulter 2 der Fall ist. Dieses Verschwenken kann geschehen, während die symmetrische Lage des Hüllmaterialstreifens eingenommen ist. Manuelle Nachjustierungen können auch in der geschlossenen Lage 9 noch stattfinden. Danach kann die Produktion gestartet werden, d. h. die Abzüge an sämtlichen Formschultern 2 werden in Gang gesetzt, so dass jeder Hüllmaterialstreifen taktweise längs- und quergesiegelt wird. Über die Füllrohre 3 wird das Füllgut in jeden Schlauchbeutel eingebracht.

Bei einem Rollenwechsel unter Anwendung der Klebetechnik wird das Ende eines vorangehenden Hüllmaterialstreifens mit dem Anfang eines nachfolgenden Hüllmaterialstreifens vor der jeweiligen Formschulter 2 aneinandergeklebt. Dies kann im Stillstand der Schlauchbeutelmaschine 1 oder aber auch während der Produktion geschehen. Ohne Unterbrechung des Abzugs der Schlauchbeutelmaschine wird der Rollenwechsel in der Regel mechanisch durchgeführt, also vielleicht mit temporär verringerter Abzugsgeschwindigkeit an der Schlauchbeutelmaschine 1. Durch die Klebestelle tritt im einen wie im anderen Fall eine Verdickung am Hüllmaterialstreifen ein, wobei die Dicke größer sein kann als der Durchzugsspalt 15. In diesem Falle würde jede Klebestelle zu einem Abriss des Hüllmaterialstreifens führen, wodurch nichts gewonnen wäre. Durch ein Verschwenken der Teile 7 und 8 der betreffenden Formschulter 2 aus der geschlossenen Lage 9 in die geöffnete Lage 10 wird der Durchzugsspalt 15 vergrößert, so dass die Klebestelle ungehindert passieren kann. Nach dem Durchtritt der Klebestelle werden die Teile 7 und 8 der Formschulter wieder in die geschlossene Lage 9 zurückgeführt, so dass der Spalt 25 geschlossen wird. Der Spalt 25 bildet sich nicht nur auf der Vorderseite des Kanals, also der Bedienungsperson zugewandt, sondern auch im rückwärtigen Bereich des Kanals 14 zwischen den Teilen 7 und 8, also dem Träger 20 zugeordnet. In diesem Bereich besteht die Gefahr, dass der Hüllmaterialstreifen in den geöffneten Spalt 25 einläuft und sich dort festklemmt. Da das Einlaufen des Hüllmaterialstreifens in diesen Spalt eine gewisse Zeit braucht, ist es sinnvoll, entweder zumindest die Spannung auf den Hüllmaterialstreifen beim Durchlauf der Klebestelle zu erniedrigen oder ganz wegzunehmen und/oder den Verschwenkungsvorgang in die geöffnete Lage 10 relativ kurzfristig zu gestalten. Dies kann insbesondere durch einen mechanischen Antrieb für die Verschwenkung der Teile 7 und 8 der Formschulter zueinander erfolgen.

Die in den Fig. 1 bis 3 dargestellte geteilte Formschulter verdeutlicht die grundsätzliche Lage der ersten Trennebene 6 und der dadurch gebildeten verschwenkbaren Teile 7, 8 der Formschulter. Das Ausführungsbeispiel der Fig. 1 bis 3 weist keine zweite Trennebene (Teilungsebene) nicht und ist daher vom Wortlaut des Anspruchs 1 in der eingereichten Fassung nicht umfasst.

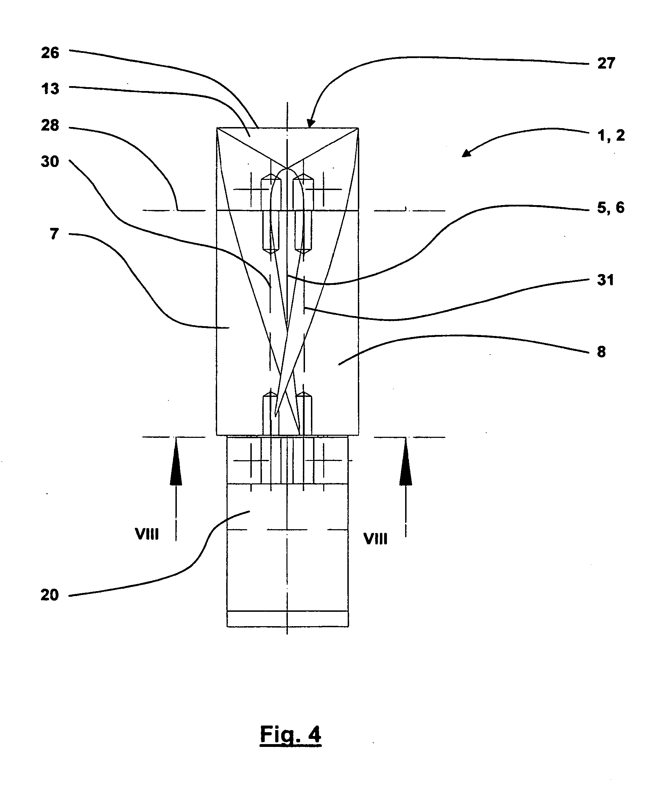

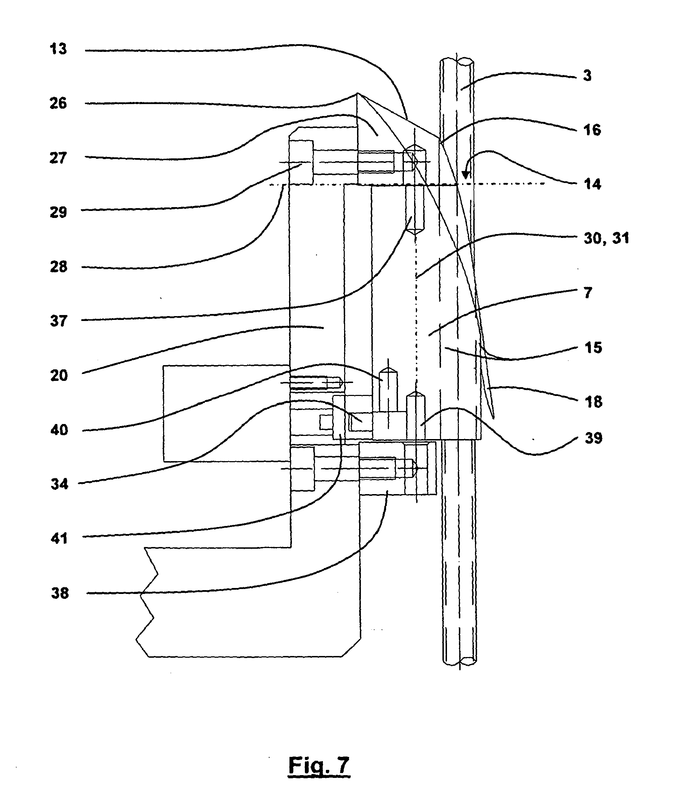

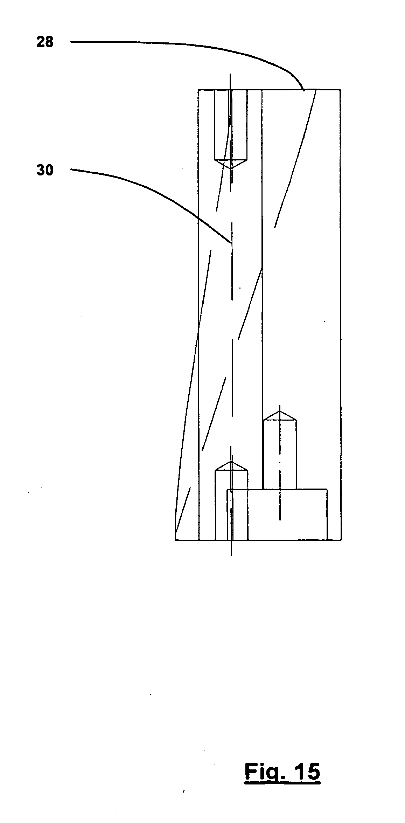

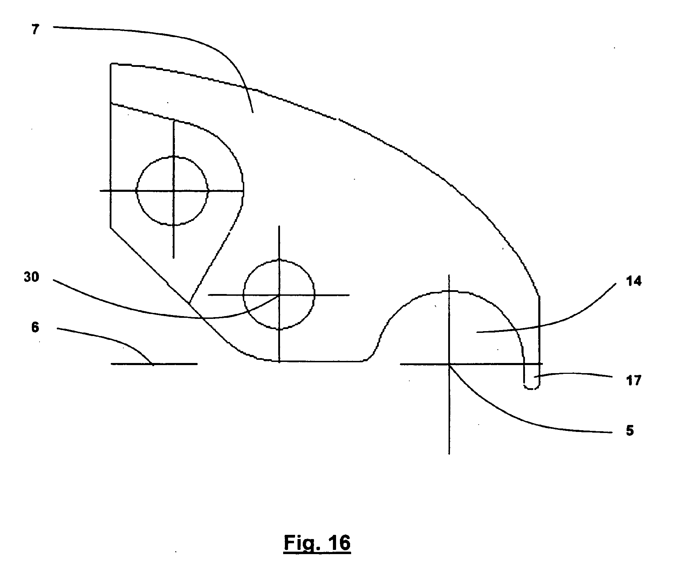

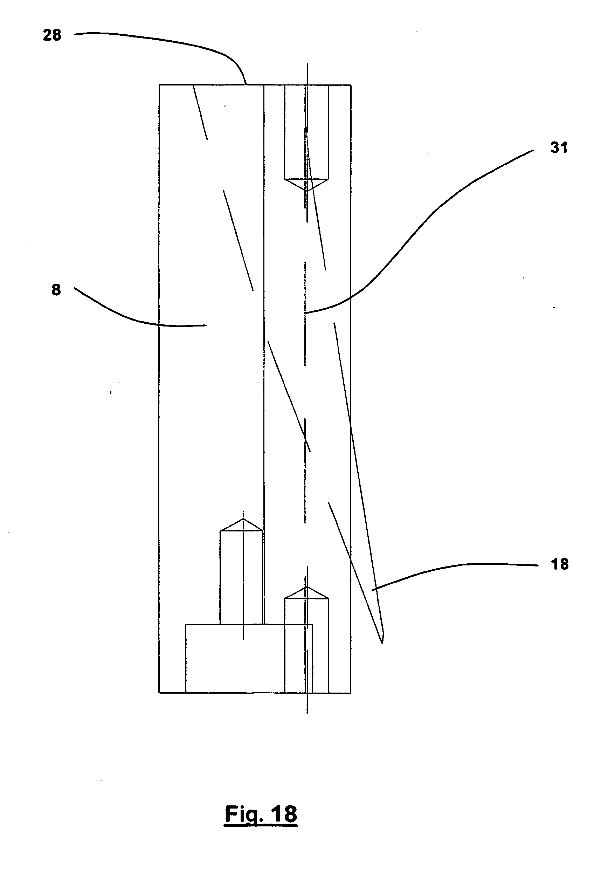

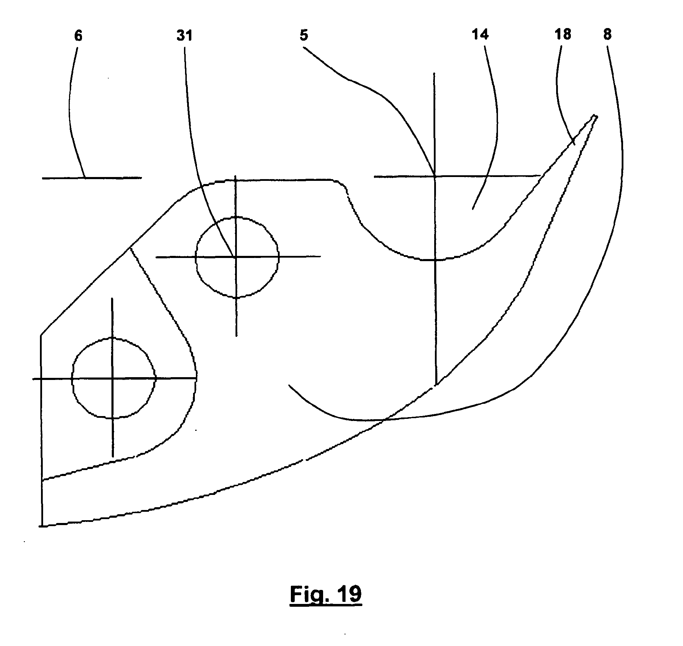

In den Fig. 4 bis 19 ist eine zweite Ausführungsform für eine geteilte Formschulter 2 einer Schlauchbeutelmaschine 1 gemäß der vorliegenden Erfindung dargestellt. Fig. 4 zeigt eine einzelne Formschulter 2. Fig. 4 zeigt damit eine ähnliche Darstellung wie Fig. 1 des anderen Ausführungsbeispiels, wobei jedoch das Füllrohr 3 (Fig. 7) in Fig. 4 nicht dargestellt ist.

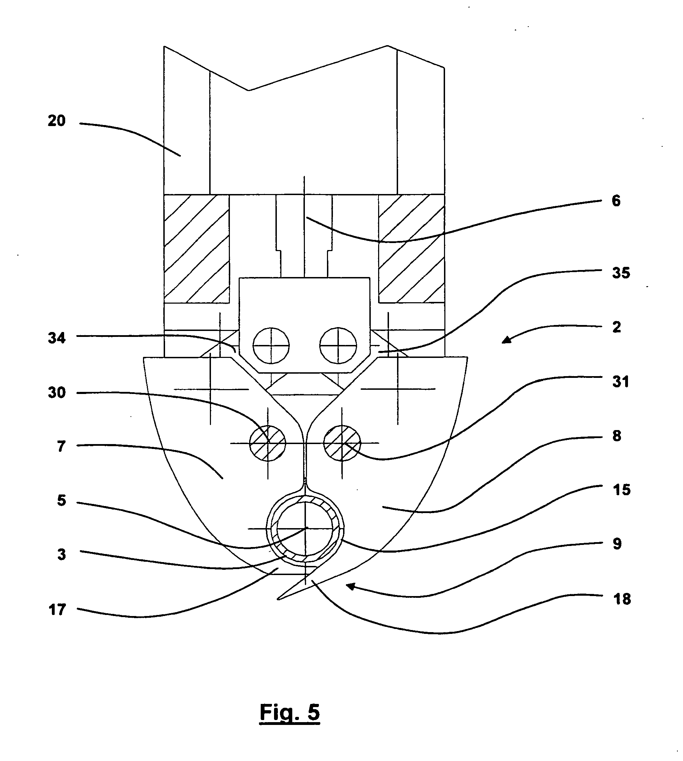

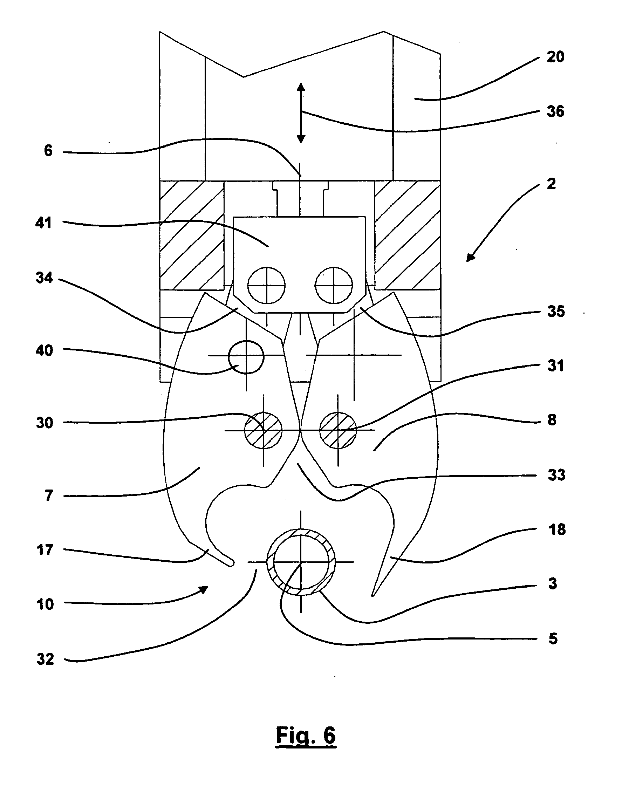

Die Formschulter 2 ist dreiteilig aufgebaut und besteht im Wesentlichen aus den Teilen 7 und 8 sowie einer Kappe 27. Die Unterteilung zwischen der Kappe 27 einerseits und den beiden Teilen 7 und 8 andererseits erfolgt in einer Teilungsebene 28, also einer zweiten Trennebene, die bei einer vertikalen Schlauchbeutelmaschine 1 eine horizontale Ebene darstellt. Die Teilung zwischen den Teilen 7 und 8 erfolgt auch hier in der Trennebene 6, die sich vertikal erstreckt. Die Teilungsebene 28 steht daher senkrecht auf der Trennebene 6. Die Kappe 27 ist ortsfest angeordnet. Eine den Träger 20 durchsetzende Schraube 29 (Fig. 7) lässt die ortsfeste Anordnung der Kappe 27 an dem Träger 20 erkennen. Die Teile 7 und 8 der Formschulter 2 sind bei diesem zweiten Ausführungsbeispiel nicht um eine horizontale Drehachse, sondern um zwei sich vertikal erstreckende Drehachsen 30, 31 schwenkbar. Konstruktive Varianten ermöglichen es auch, die Drehachsen 30 und 31 ineinander fallen zu lassen. Bei dem gezeigten Ausführungsbeispiel sind jedoch die Drehachsen 30 und 31 in einem Abstand voneinander angeordnet (siehe insbesondere Fig. 5 und 6). Fig. 5 zeigt die geschlossene Lage 9 der Teile 7 und 8 der Formschulter 2. Fig. 6 zeigt die geöffnete Lage 10 der Teile 7 und 8 der Formschulter 2. Fig. 5 lässt erkennen, dass der zwischen dem Kanal 14 und dem Füllrohr 3 gebildete Durchzugsspalt 15 über weite Umfangsbereiche nahezu vollständig um 360° geschlossen ist und nur zwischen den Nasen 17 und 18 offensteht, damit die Ränder des Hüllmaterialstreifens an dieser Stelle nach außen hindurch treten können. Fig. 6 zeigt die geöffnete Lage 10, wobei der besondere Vorteil dieser konstruktiven Ausführungsform deutlich erkennbar ist, nämlich die Möglichkeit, das Füllrohr 3 durch eine translatorische Bewegung senkrecht zu der Mittelachse 5 oder durch eine entsprechende Verschwenkbewegung, die im Wesentlichen ebenfalls senkrecht zu der Mittelachse 5 verläuft, aus dem Kanal 14 nach vorne herauszuführen, um den Einfädelvorgang zu begünstigen und den Kanal 14 völlig frei zugänglich zu gestalten. Fig. 5 zeigt die geschlossene Stellung der Teile 7 und 8, Fig. 6 die geöffnete Stellung. Die Ausführungsform der Fig. 5 und 6 zeigt eine Gestaltung, wie sie bei einer Schlauchbeutelmaschine mit einer einzelnen Formschulter oder mit mehreren, auf vergleichsweise größerer Teilung angeordneter Formschultern angewendet werden kann. Es ist jedoch möglich, die äußere Umfangsgestaltung der Teile 7 und 8 der Fig. 5 und 6 so abzuändern, dass in der geschlossenen Lage 9 die äußeren Enden der Teile 7 und 8 gegenüber dem Träger 20 nicht überstehen. Dieser Umriss ist dann so verkleinert, dass ein Überstand vermieden wird. Damit ist auch diese Ausführungsform für eine mehrbahnige Arbeitsweise in besonderer Weise geeignet, bei der die einzelnen Formschultern in einer Teilung angeordnet sind, die der Breite des Hüllmaterialstreifens entspricht (vgl. Fig. 1).

Insbesondere Fig. 6 lässt erkennen, dass die Teile 7 und 8 der Formschulter in der geöffneten Lage 10 einen sich vertikal erstreckenden Spalt 32 bilden, der funktionsmäßig mit dem Spalt 25 der Ausführungsform der Fig. 1 bis 3 vergleichbar ist. Unterschiedlich ist jedoch, dass sich der Spalt als Rechteckfläche öffnet, so dass der gesamte Kanal von oben nach unten frei zugänglich ist. Durch die schwenkbewegliche Lagerung der Teile 7 und 8 der Formschulter 2 bildet sich auch im hinteren Bereich ein Spalt 33, der jedoch keine nachteiligen Folgen hat. Ein Einlaufen des Hüllmaterialstreifens in diesen Spalt 33 wird durch die besondere Teilung und Anordnung der Teile der Formschulter 2 vermieden. Aus Fig. 7 ist erkennbar, dass die Teilungsebene 28 etwa so angeordnet ist, dass sich die vorderen Enden der Kappe 27 an dem Füllrohr 3 in einem Abstand befinden, der zumindest etwa auf 180° gegenüberliegend angeordnet ist. Die Führungsfläche 13 an der Kappe 27 erstreckt sich durchgehend von der Einlaufkante 26 bis zur Umlenkkante 16 sowie darüber hinaus seitlich bis über die vorderen Enden der Kappe 27. Damit wird einerseits erreicht, dass der Kanal 14 auch im Bereich der Kappe 27 offen und von vorn zugänglich ist. Andererseits wird der Hüllmaterialstreifen so geführt, dass er während des Einfädelns nicht die Tendenz hat, in den Spalt 33 einzulaufen und sich dort zu verklemmen. Insoweit ist die Anordnung des Spalts 33, die aus konstruktiven Gründen erforderlich ist, nicht nachteilig. Das Einschwenken oder translatorische Verschieben des Füllrohrs 3 in eine Richtung senkrecht zur Mittelachse 5 in der geöffneten Lage 10 gemäß Fig. 6 hat auch den weiteren Vorteil, dass die Hüllmaterialbahn ohne Faltenbildung den Durchzugsspalt 15 ausfüllt, sobald das Füllrohr 3 eingeschwenkt und die Teile 7 und 8 der Formschulter in die geschlossene Lage 9 überführt sind.

Insbesondere für einen Rollenwechsel unter Anwendung der Klebetechnik ist es sinnvoll, wenn die Verschwenkung der beiden Teile 7 und 8 aus der geschlossenen Lage 9 in die geöffnete Lage 10 und wieder zurück mechanisch automatisch bzw. gesteuert erfolgen kann. Die Fig. 5 und 6 lassen die Anlenkung der Teile 7 und 8 an den Drehachsen 30 und 31 erkennen. Über zwei gelenkig verbundene Doppellaschen 34 und 35 ist erkennbar, dass beispielsweise mit Hilfe eines pneumatisch oder hydraulisch gesteuerten Zylinders (nicht dargestellt) die Verschwenkbewegung in Richtung des Doppelpfeils 36 erfolgen kann. Die Steuerung unter Anwendung eines Zylinders kann automatisch erfolgen, insbesondere bei Rollenwechsel. Für einen Einfädelvorgang kann auch eine manuelle Auslösung der Steuerung sinnvoll sein.

Insbesondere aus Fig. 7 ist die konstruktive Ausbildung und Realisierung der vertikalen Drehachsen 30 und 31 erkennbar. Zu diesem Zweck ist in der Kappe 27 ein Drehbolzen 37 gelagert. Unter den Teilen 7 und 8 der Formschulter 2 ist ein Lagerbock 38 angeordnet und mit dem Träger 20 verbunden. Der Lagerbock dient zur Aufnahme eines weiteren Drehbolzens 39, so dass damit die Drehachse 30 für das Teil 7 der Formschulter 2 bestimmt ist. Es versteht sich, dass die Drehachse 31 des Teils 8 der Formschulter auf die gleiche Weise, jedoch mit dem ersichtlichen Abstand, vorgesehen und ausgebildet ist. In dem Teil 7 ist ein weiterer Bolzen 40 (Fig. 7) vorgesehen, an dem die Doppellasche 34 gelenkig angelenkt ist. Entsprechendes gilt für die Anlenkung der Doppellasche 35 an dem Teil 8 der Formschulter. Die Doppellaschen 34 und 35 sind gelenkig an einem gemeinsamen Druckstück 41 gelagert, so dass sich die Teile 7 und 8 symmetrisch zu der Trennebene 6 bewegen, wenn das Druckstück 41 in Richtung des Doppelpfeils 36 bewegt wird. Es versteht sich, dass die mechanische Steuerung und der Antrieb über einen Zylinder auch in anderer Weise realisiert werden kann.

Der besondere Vorteil der Ausführungsform der Fig. 4 bis 19 besteht darin, dass die Verschwenkung der Teile 7 und 8 aus der geschlossenen Lage 9 in die geöffnete Lage 10 und wieder zurück mechanisch automatisch gesteuert werden kann, was insbesondere für einen Rollenwechsel vorteilhaft ist. Wenn das Ankleben auch automatisch erfolgt, entfällt eine Betriebsunterbrechung unter Nutzung des Stillstands der Schlauchbeutelmaschine und die Schlauchbeutelmaschine 1 kann durchgehend betrieben werden. Es ist natürlich zweckmäßig, im Bereich der Klebung den Füllvorgang unter Umständen zu unterbrechen und die sich bildenden nicht gefüllten Schlauchbeutel im Bereich der Klebestelle als Abfall aus der Produktion auszusondern.

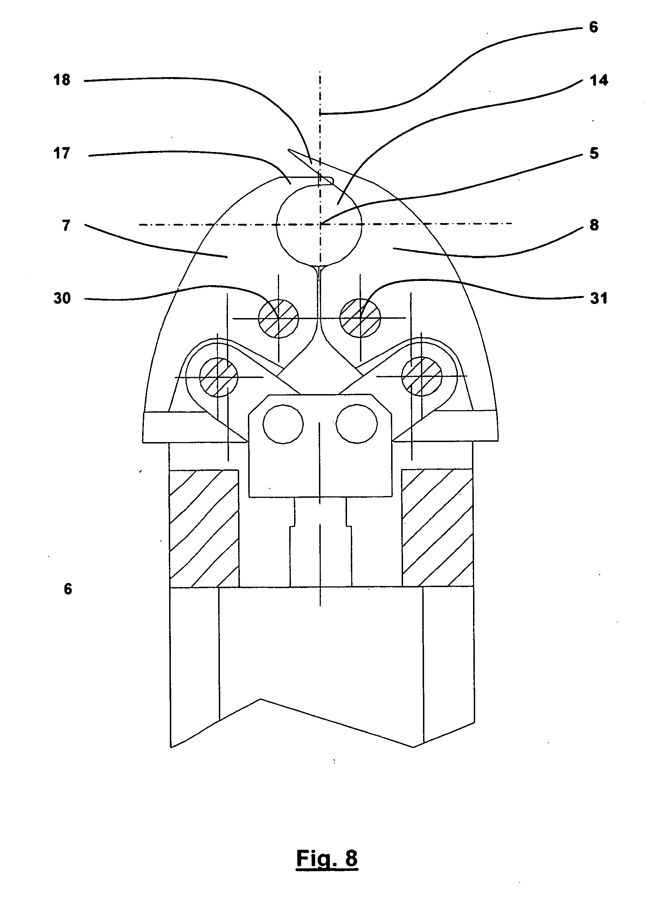

Fig. 8 zeigt eine Ansicht auf die Teile 7 und 8 von unten, also gemäß der Linie VIII-VIII in Fig. 4, und zwar in vergrößerndem Maßstab. Es ist insbesondere erkennbar, wie der Kanal 14 in geschlossener Lage 10 auf seinem Umfang weitgehend durchgehend geschlossen ist. Auch der Spalt 33 (Fig. 6) ist geschlossen. Das Füllrohr 3 ist aus Übersichtlichkeitsgründen nicht dargestellt.

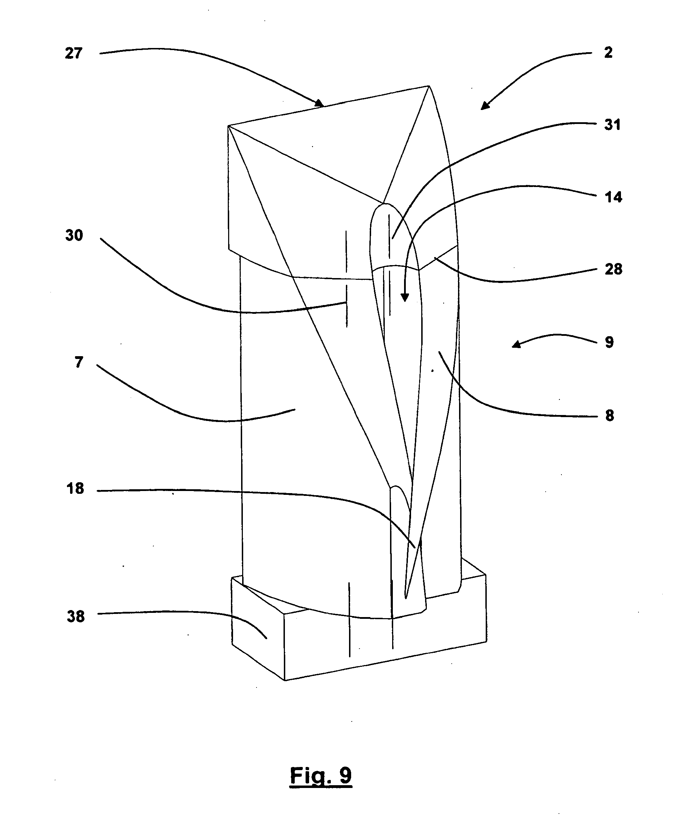

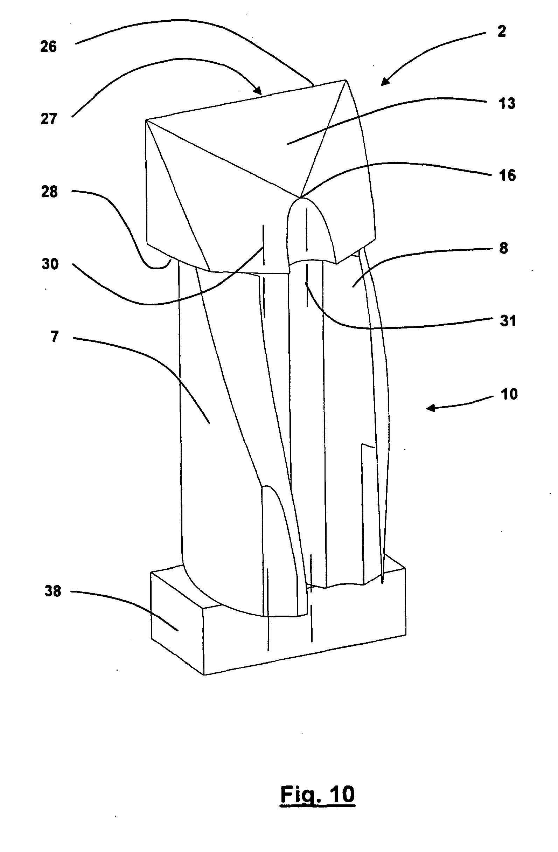

Die Fig. 9 und 10 zeigen noch einmal perspektivische Darstellungen der wesentlichen Teile der Formschulter in geschlossener Lage 9 und in geöffneter Lage 10. Es ist insbesondere erkennbar, dass die Formschulter 2 hier aus drei Teilen 7, 8, 27 besteht. Die Kappe 27 ist ortsfest angeordnet, sie kann aber bei Verschleiß ausgetauscht werden. Im Betrieb der Schlauchbeutelmaschine 1 steht die Kappe 27 jedenfalls ortsfest und wird nicht bewegt. Dagegen können die Teile 7 und 8 der Formschulter 2 während des Betriebs bewegt werden. Diese Bewegung bezieht sich sowohl auf den Einfädelvorgang bei Stillstand einer Schlauchbeutelmaschine 1 wie auch auf eine Bewegung bei einem automatisierten Rollenwechsel.

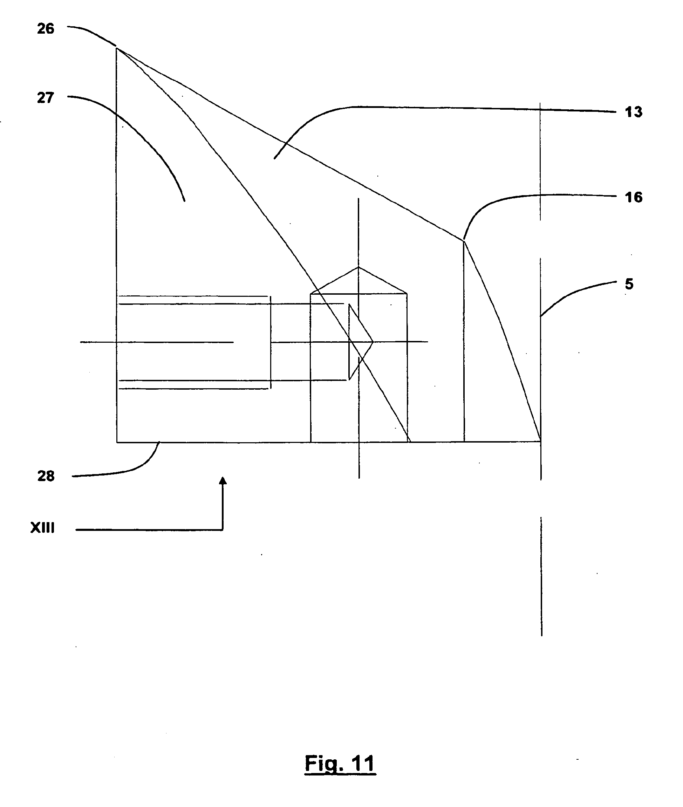

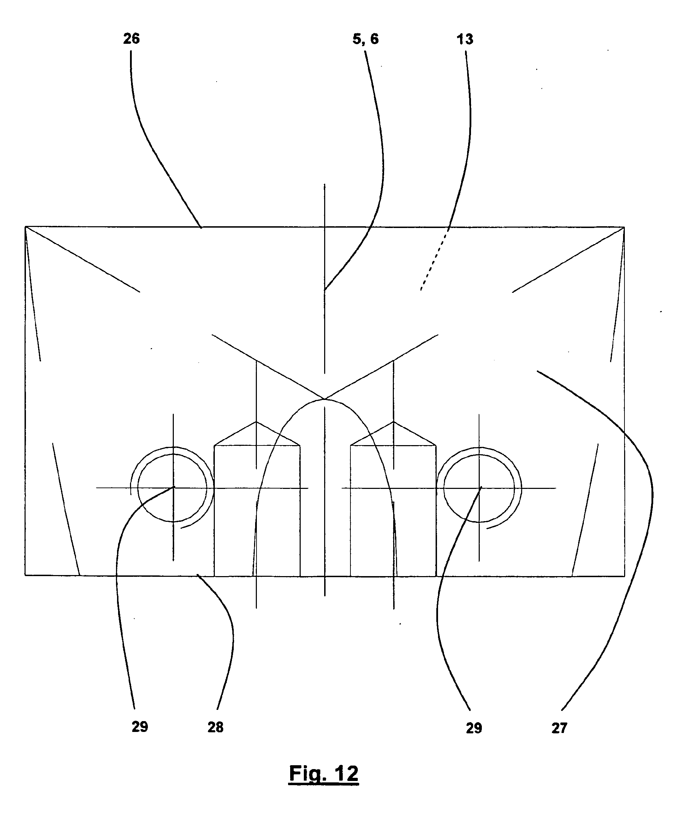

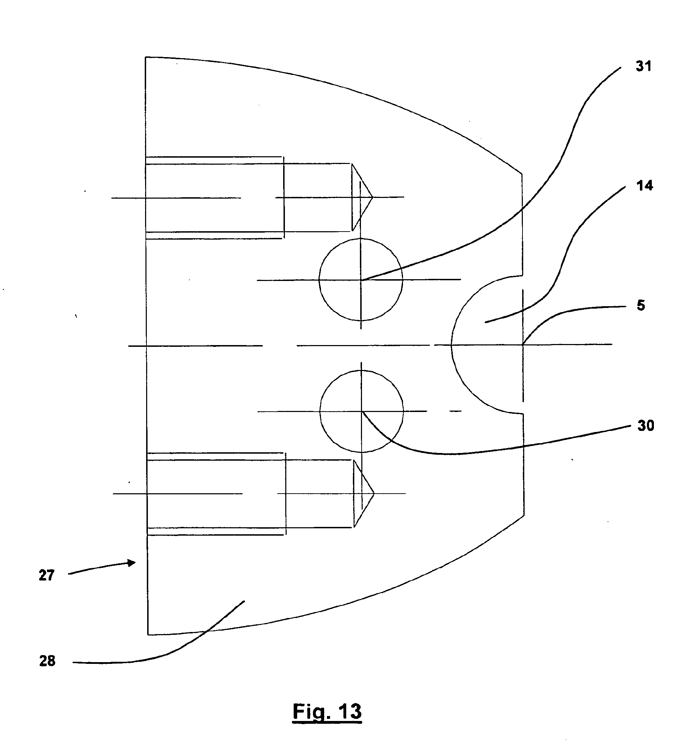

Die Fig. 11 bis 19 zeigen in verschiedenen Ansichten die Einzelteile der Formschulter 2. Fig. 11 bis 13 zeigt in Einzeldarstellung die Kappe 27. Aus Fig. 12 ist erkennbar, dass zwei Schrauben 29 zur Befestigung der Kappe 27 an dem Träger 20 vorgesehen sind. Fig. 13 zeigt eine Ansicht der Kappe 27 von unten, also gemäß der Linie XIII in Fig. 11. Es ist erkennbar, dass die Hälfte des Kanals 14 nach vorn, also zur Bedienungsseite der Schlauchbeutelmaschine 1 offen gestaltet ist, so dass das Einschwenken oder translatorische Verschieben des Füllrohrs 3 in der entsprechenden Richtung nicht behindert wird.

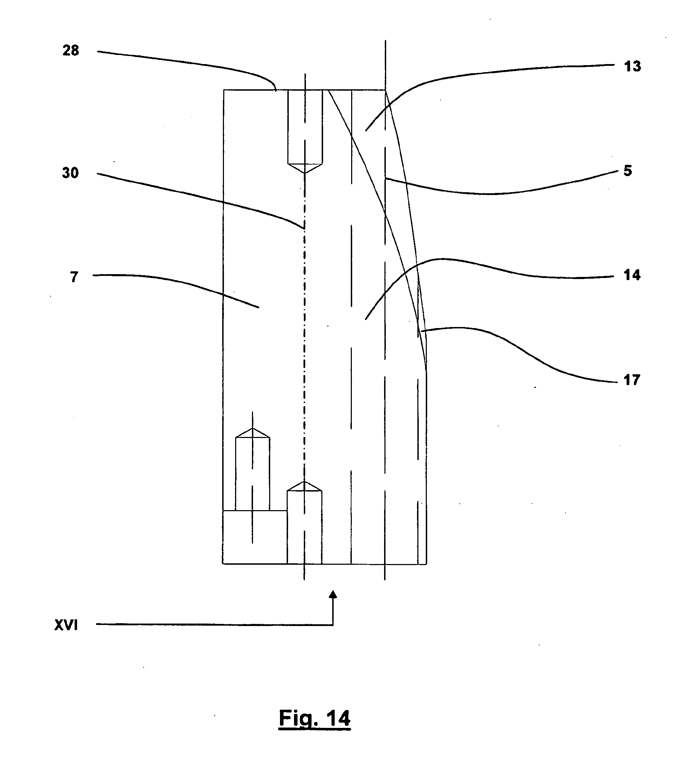

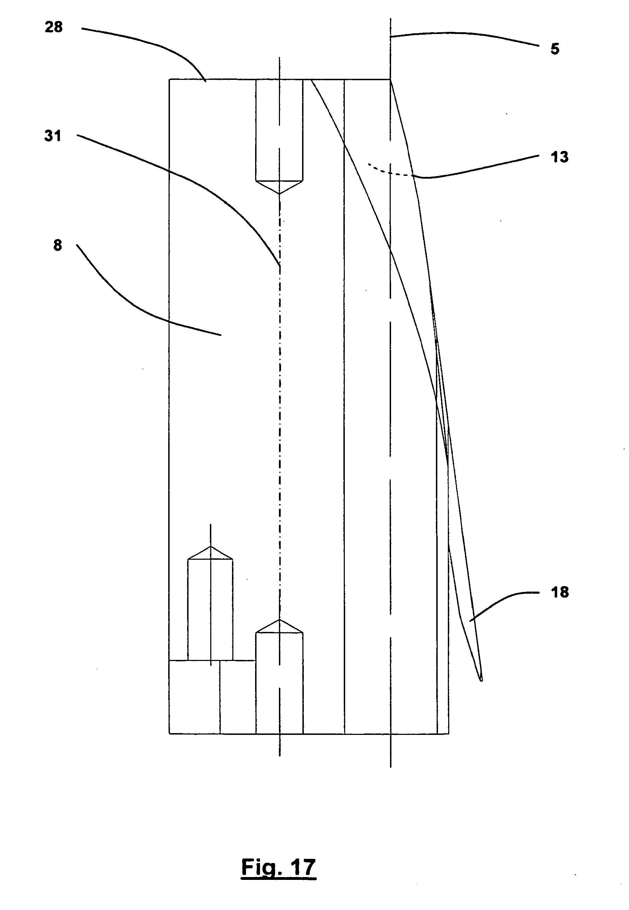

In den Fig. 14 bis 16 ist das Teil 7 der Formschulter 2 in verschiedenen Ansichten verdeutlicht. Die Fig. 17 bis 19 zeigen das Teil 8 der Formschulter 2 in entsprechenden Darstellungen.

### BEZUGSZEICHENLISTE

| | | | |
|---|---|---|---|
| 1 | Schlauchbeutelmaschine | 31 | Drehachse |
| 2 | Formschulter | 32 | Spalt |
| 3 | Füllrohr | 33 | Spalt |
| 4 | Werkzeug | 34 | Doppellasche |
| 5 | Mittelachse | 35 | Doppellasche |
| 6 | Trennebene | 36 | Doppelpfeil |
| 7 | Teil | 37 | Drehbolzen |
| 8 | Teil | 38 | Lagerbock |
| 9 | geschlossene Lage | 39 | Drehbolzen |
| 10 | geöffnete Lage | 40 | Bolzen |
| 11 | Drehachse | 41 | Druckstück |
| 12 | Teilung | | |
| 13 | Führungsfläche | | |
| 14 | Kanal | | |
| 15 | Durchzugsspalt | | |
| 16 | Umlenkkante | | |
| 17 | Nase | | |
| 18 | Nase | | |
| 19 | Fortsatz | | |
| 20 | Träger | | |
| 21 | Schraube | | |
| 22 | Bogennut | | |
| 23 | Langloch | | |
| 24 | Langloch | | |
| 25 | Spalt | | |
| 26 | Einlaufkante | | |
| 27 | Kappe | | |
| 28 | Teilungsebene | | |
| 29 | Schraube | | |
| 30 | Drehachse | | |

## Patentansprüche

1. Werkzeug (4) für eine Schlauchbeutelmaschine (1) zum Umformen eines ebenen Hüllmaterialstreifens in einen Schlauch, mit
einem Füllrohr (3); und
einer Formschulter (2) mit einem ersten Teil (7) und einem zweiten Teil (8),
wobei die Formschulter (2) in einer durch die Mittelachse (5) des Füllrohrs (3) und der Formschulter (2) sowie durch die Mittellinie des Hüllmaterialstreifens definierten Trennebene (6) zur Bildung der Teile (7, 8) geteilt ausgebildet ist,
wobei der erste Teil (7) und der zweite Teil (8) der Formschulter (2) derart relativ zueinander verschwenkbar angeordnet sind, dass die zwei Teile (7, 8) in eine geschlossene Lage (9) und in eine geöffnete Lage (10) bewegbar sind,
wobei die Formschulter (2) eine Führungsfläche (13) für den Hüllmaterialstreifen und einen Kanal (14) zur Aufnahme des Füllrohrs (3) aufweist,
wobei zwischen dem Füllrohr (3) und dem Kanal (14) ein Durchzugsspalt (15) für den Durchtritt des Hüllmaterialstreifens bzw. Schlauchs gebildet ist, **dadurch gekennzeichnet, dass**
die Formschulter (2) eine ortsfest angeordnete Kappe (27) aufweist, welche die Führungsfläche (13) für den Hüllmaterialstreifen bildet, und
die Kappe (27) von den zwei Teilen (7, 8) durch eine senkrecht zu der Mittelachse (5) verlaufende Teilungsebene (28) geteilt ist.

2. Werkzeug (4) nach Anspruch 1, **dadurch gekennzeichnet, dass** die Formschulter (2) so geteilt ist und die zwei Teile (7, 8) so bewegbar angeordnet sind, dass
in der geschlossenen Lage (9) der von den zwei Teilen (7, 8) gebildete Kanal (14) das Füllrohr (3) auf mehr als dem halben Umfang umschließt, und
in der geöffneten Lage (10) der Durchzugsspalt (15) so vergrößert ist, dass die erleichterte Handhabung des Hüllmaterialstreifens ermöglicht ist.

3. Werkzeug (4) nach Anspruch 1 oder 2, **dadurch gekennzeichnet, dass** die zwei Teile (7, 8) so relativ zueinander beweglich angeordnet sind, dass
sich der Kanal (14) in der geschlossenen Lage (9) randoffen bildet, und
sich der Kanal (14) in der geöffneten Lage (10) vergrößert randoffen bildet, so dass der Hüllmaterialstreifen in der geöffneten Lage (10) mit einer im Wesentlichen senkrecht zu der Mittelachse (5) des Füllrohrs (3) und der Formschulter (2) verlaufenden Bewegung in den Kanal (14) einfädelbar ist.

4. Werkzeug (4) nach mindestens einem der Ansprüche 1 bis 3, **dadurch gekennzeichnet, dass** zwei Teile (7, 8) der Formschulter (2) um eine gemeinsame Drehachse (11; 30, 31) schwenkbar angeordnet sind.

5. Werkzeug (4) nach mindestens einem der Ansprüche 1 bis 4, **dadurch gekennzeichnet, dass** die Kappe (27) in der geschlossenen Lage (9) im Einlaufbereich des Hüllmaterialstreifens eine Breite aufweist, die der Breite des Hüllmaterialstreifens entspricht.

6. Werkzeug (4) nach mindestens einem der Ansprüche 1 bis 5, **dadurch gekennzeichnet, dass** die Teilungsebene (28) so angeordnet ist, dass die Verschneidungslinie zwischen der Teilungsebene (28) und dem Kanal (14) den Kanal etwa auf dem halben Umfang umschließt.

7. Werkzeug (4) nach mindestens einem der Ansprüche 1 bis 6, **dadurch gekennzeichnet, dass** die zwei Teile (7, 8) so relativ zueinander bewegbar angeordnet sind, dass sich in der geöffneten Lage (10) das Füllrohr (3) durch eine im Wesentlichen senkrecht zu der Mittelachse (5) verlaufende Bewegung aus dem Kanal (14) herausführen und auch wieder einbringen lässt.

8. Werkzeug (4) nach mindestens einem der Ansprüche 1 bis 7, **dadurch gekennzeichnet, dass** den zwei Teile (7, 8) ein gesteuerter Antrieb zugeordnet ist, mit dem die zwei Teile (7, 8) zwischen der geschlossenen und der geöffneten Lage bewegbar angeordnet sind.

9. Schlauchbeutelmaschine (1) mit einem Werkzeug (4) mit den Merkmalen nach mindestens einem der Ansprüche 1 bis 8.

## Claims

1. A tool (4) for a bag-making machine (1) for deforming a flat strip of wrapping material into a tube, comprising
a filling pipe (3); and
a forming shoulder (2) including a first part (7) and a second part (8),
the forming shoulder (2) being designed to be divided in a separation plane (6) being defined by the centre axis (5) of the filling pipe (3) and of the forming shoulder (2) as well as by the centre line of the strip of wrapping material to form the parts (7, 8),
the first part (7) and the second part (8) of the forming shoulder (2) being arranged to be pivotable with respect to one another such that the two parts (7, 8) can be moved into a closed position (9) and into in opened position (10),
the forming shoulder (2) including a guiding surface (13) for the strip of wrapping material and a channel (14) for the arrangement of the filling pipe (3),
a pull through gap (15) for a passage of the strip of wrapping material and of the tube, respectively, being formed between the filling pipe (3) and the channel (14), **characterised in that**
the forming shoulder (2) includes a cap (27) forming the guiding surface (13) for the strip of wrapping material, and
the cap (27) is designed to be separate from the two parts (7, 8) by a separation plane (28) extending perpendicular to the centre axis (5).

2. The tool (4) of claim 1, **characterised in that** the forming shoulder (2) is divided and the two parts (7, 8) are arranged to be movable such that
in the closed position (9), the channel (14) being formed by the two parts (7, 8) surrounds the filling pipe (3) by more than half of its circumference, and
in the opened position (10), the pull through gap (15) is enlarged such that simplified handling of the strip of wrapping material is possible.

3. The tool (4) of claim 1 or 2, **characterised in that** the two parts (7, 8) are movable with respect to one another such that
in the closed position (9), the channel (14) is designed to be circumferentially opened, and
in the opened position (10), the channel (14) is designed to be circumferentially opened in an enlarged way such that, in the opened position (10), the strip of wrapping material can be introduced into the channel (14) by a movement being substantially perpendicular to the centre axis (5) of the filling pipe (3) and of the forming shoulder (2).

4. The tool (4) of at least one of claims 1 to 3, **characterised in that** the two parts (7, 8) of the forming shoulder (2) are arranged to be pivotable about a common rotational axis (11; 30, 31).

5. The tool (4) of at least one of claims 1 to 4, **characterised in that,** in the closed position (9), the cap (27) in the inlet portion of the strip of wrapping material has a width corresponding to the width of the strip of wrapping material.

6. The tool (4) of at least one of claims 1 to 5, **characterised in that** the separation plane (28) is arranged such that the line of intersection between the separation plane (28) and the channel (14) surrounds the channel (14) about approximately half of its circumference.

7. The tool (4) of at least one of claims 1 to 6, **characterised in that** the two parts (7, 8) are arranged to be movable with respect to one another such that, in the opened position (10), the filling pipe (3) can be removed from and reintroduced into the channel (14) by a movement being substantially perpendicular to the centre axis.

8. The tool (4) of at least one of claims 1 to 7, **characterised in that** the two parts (7, 8) are associated with a controlled drive with which the two parts (7, 8) can be moved between the closed position and the opened position.

9. A bag-making machine (1) including a tool (4) having the features of at least one of claims 1 to 8.

## Revendications

1. Outillage (4) pour ensacheuse verticale (1), destiné à transformer une bande de matériau de gainage plane en tube, comprenant
un tuyau de remplissage (3) ; et
un épaulement de façonnage (2) avec une première partie (7) et une deuxième partie (8),
dans lequel l'épaulement de façonnage (2) est réalisé de façon divisée dans un plan de séparation (6) défini par la ligne médiane (5) du tuyau de remplissage (3) et de l'épaulement de façonnage (2) ainsi que par la ligne médiane de la bande de matériau de gainage pour former les parties (7, 8),
dans lequel la première partie (7) et la deuxième partie (8) de l'épaulement de façonnage (2) sont disposées de façon à pouvoir pivoter l'une par rapport à l'autre de telle sorte que les deux parties (7, 8) peuvent être déplacées vers une position fermée (9) et vers une position ouverte (10),
dans lequel l'épaulement de façonnage (2) présente une surface de guidage (13) pour la bande de matériau de gainage et un canal (14) pour recevoir le tuyau de remplissage (3),
dans lequel entre le tuyau de remplissage (3) et le canal (14) une fente d'étirage (15) pour le passage de la bande de matériau de gainage ou le tube est formée,
**caractérisé en ce que**
l'épaulement de façonnage (2) présente un capuchon (27) disposé de façon fixe, formant la surface de guidage (13) pour la bande de matériau de gainage, et
le capuchon (27) est divisé par les deux parties (7, 8) à travers un plan de joint (28) s'étendant verticalement à la ligne médiane (5).

2. Outillage (4) selon la revendication 1, **caractérisé en ce que** l'épaulement de façonnage (2) est divisé de telle sorte, et les deux parties (7, 8) sont disposées de façon mobile de telle sorte que
dans la position fermée (9) le canal (14) formé par les deux parties (7, 8) entoure le tuyau de remplissage (3) sur plus de la moitié de la circonférence, et
dans la position ouverte (10), la fente d'étirage (15) est agrandie de façon à permettre une manipulation plus aisée de la bande de matériau de gainage.

3. Outillage (4) selon la revendication 1 ou 2, **caractérisé en ce que** les deux parties (7, 8) sont disposées de façon mobile l'une par rapport à l'autre de telle sorte que
le canal (14) dans la position fermée (9) se forme avec un bord ouvert, et
le canal (14) dans la position ouverte (10) se forme avec un bord ouvert plus grand de sorte que la bande de matériau de gainage dans la position ouverte (10) peut être enfilée dans le canal (14) par un mouvement s'étendant substantiellement verticalement à la ligne médiane (5) du tuyau de remplissage (3) et de l'épaulement de façonnage (2).

4. Outillage (4) selon au moins l'une des revendications 1 à 3, **caractérisé en ce que** deux parties (7, 8) de l'épaulement de façonnage (2) sont disposées de façon pivotante autour d'un axe de rotation commun (11 ; 30, 31).

5. Outillage (4) selon au moins l'une des revendications 1 à 4, **caractérisé en ce que** le capuchon (27) dans la position fermée (9) présente dans la zone d'entrée de la bande de matériau de gainage une largeur correspondant à la largeur de la bande de matériau de gainage.

6. Outillage (4) selon au moins l'une des revendications 1 à 5, **caractérisé en ce que** le plan de joint (28) est disposé de telle sorte que la ligne d'intersection entre le plan de joint (28) et le canal (14) enferme le canal approximativement sur la moitié de la circonférence.

7. Outillage (4) selon au moins l'une des revendications 1 à 6, **caractérisé en ce que** les deux parties (7, 8) sont disposées de façon mobile l'une par rapport à l'autre de telle sorte que dans la position ouverte (10), le tuyau de remplissage (3) peut être sorti du canal (14) et aussi ramené par un mouvement s'étendant substantiellement verticalement à la ligne médiane (5).

8. Outillage (4) selon au moins l'une des revendications 1 à 7, **caractérisé en ce que** les deux parties (7, 8) se voient attribuer un dispositif d'entraînement commandé avec lequel les deux parties (7, 8) sont disposées de façon mobile entre la position fermée et la position ouverte.

9. Ensacheuse verticale (1) avec un outillage (4) ayant les particularités selon au moins l'une des revendications 1 à 8.
